# EUROPÄISCHE PATENTSCHRIFT

(11) **EP 0 370 262 B1**
(45) Veröffentlichungstag und Bekanntmachung des Hinweises auf die Patenterteilung: **29.12.1993**
(21) Anmeldenummer: 89119865.7
(22) Anmeldetag: 26.10.1989
(51) Int. Cl.: G05D 23/19, F25B 41/06, F16K 7/07

(54) **Elektronisch steuerbares Regelventil**
Electronically controlled regulating valve
Soupape de réglage à commande électronique

(30) Priorität: 16.11.1988 DE 3838756; 01.11.1988 DE 3837083
(43) Veröffentlichungstag der Anmeldung: 30.05.1990
(73) Patentinhaber: DR. HUELLE ENERGIE-ENGINEERING GMBH, D-30459 Hannover (DE)
(72) Erfinder: Huelle, Zbigniew Ryszard, Dr., D-3000 Hannover 91 (DE)
(74) Vertreter: Leine, Sigurd, Dipl.-Ing.

(56) Entgegenhaltungen:
- CH-A- 321 639
- DE-C- 891 480
- FR-A- 1 595 857
- US-A- 2 241 086
- US-A- 2 271 307
- US-A- 2 766 765
- US-A- 2 787 130
- US-A- 3 322 147
- US-A- 3 485 472
- US-A- 4 108 418
- US-A- 4 125 125
- US-A- 4 195 810
- US-A- 4 303 100

## Beschreibung

Die Erfindung betrifft ein elektronisch steuerbares Regelventil gemäß Oberbegriff des Anspruchs 1.

Zum Anwendungsbereich solcher Regelventile gehört insbesondere die Kältetechnik; hierzu zählen auch die Klimatechnik, die Trocknungstechnik und andere Anwendungsbereiche, in welchen Kälteanlagen von unterschiedlicher Bauart und Leistung als Hauptkomponenten eingesetzt werden.

Der Entwicklungsstand in der Kältetechnik kann am besten auf der Basis der Entwicklung der drei Hauptkomponenten, der Kältemittel, der Maschinen und Apparate sowie deren Regelung gezeigt werden.

Die Technologie des umweltfreundlichen, aber für die Menschen toxischen Kältemittels Ammoniak prägte viele Jahre die Entwicklung der Kältetechnik; die Verdichter, Wärmetauscher und die Regelung wurden den spezifischen technischen Eigenschaften des Ammoniaks angepaßt.

Die Ammoniak-Technologie wurde nach der Erfindung der Fluor-Chlor-Kohlenwasserstoffe (weiter FCKW genannt) durch die wenig toxische und dadurch scheinbar umweltfreundlichere Technologie dieser Kältemittel in vielen Sparten der Kältetechnik ersetzt.

Die Entwicklung der beiden Technologien (Ammoniak und FCKW) wurde stark durch die Entwicklung der Wärmetauscher und der Regelung geprägt.

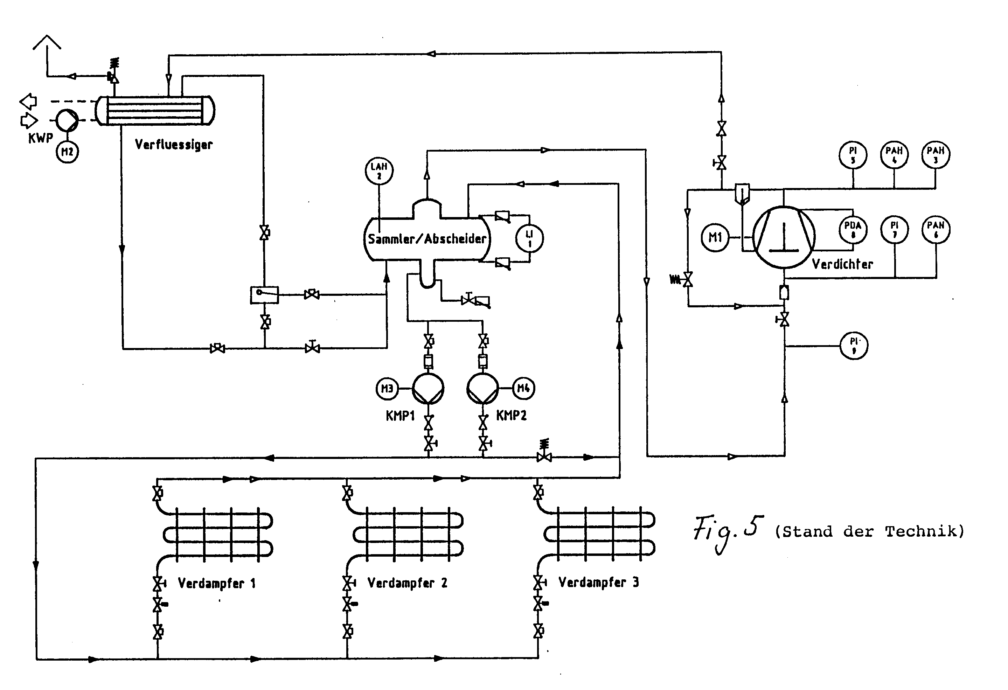

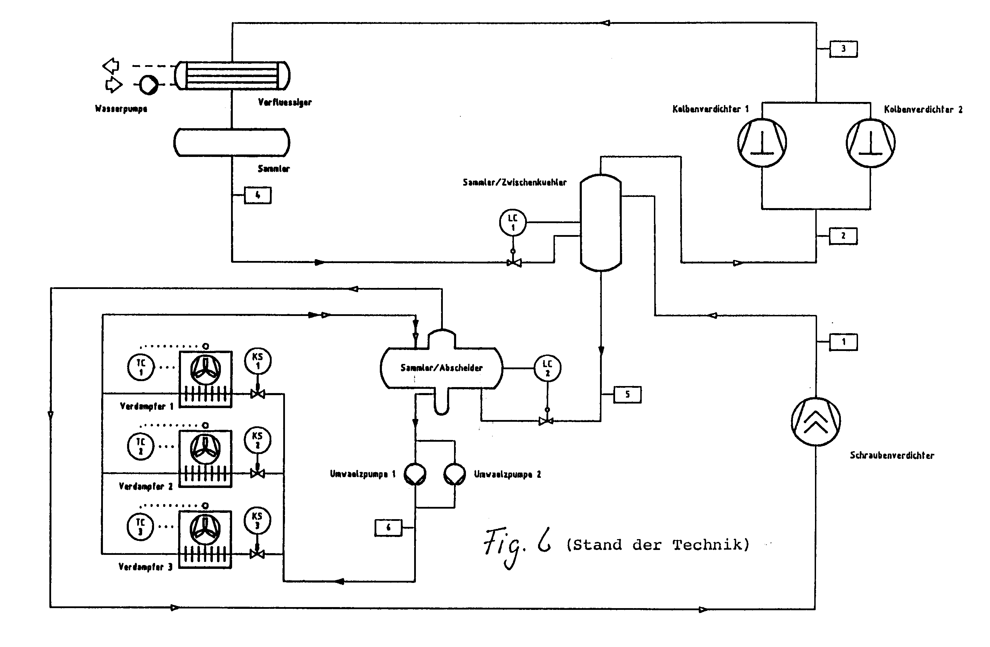

Einerseits der Drang zur größeren Effizienz im Apparatebau (besserer Wärmeübergang - kleinere, kompaktere Wärmeaustauscher) und andererseits die schwer beherrschbare Regelung der physikalisch sehr komplexen Zwei-Phasen-Strömungen in diesen Wärmeaustauschern führten zum Bau von Anlagen mit Zwangsumlauf des Betriebsmittels durch die Verdampfer und den daraus resultierenden sehr großen Mengen des Kältemittels in den Kreisläufen (Pumpen-Umwälzung mit den nötigen großvolumigen Sammlern/Abscheidern, siehe Fig. 5 und 6 - Kälteanlage mit sogenannter überfluteter Verdampfung).

Seit vielen Jahren beobachtet man eine Stagnation in der weiteren Entwicklung, und es sind bisher keine Schritte erkennbar, die zu den notwendigen Änderungen im Kälteanlagenbau führen.

Die großen Mengen von Kältemittel in Anlagen führen zu folgenden Gefahren:
a) Bei Ammoniak besteht die direkte Gefahr für die Menschen in der unmittelbaren Umgebung der Kälteanlage (toxische Wirkung), aber keine Gefahr für die Umwelt.
b) Bei FCKW besteht wenig direkte Gefahr für die Menschen, aber die erst in den letzten Jahren erkannte und immer deutlichere große Gefahr für die Umwelt (Ozon-Loch); also besteht doch auf Umwegen eine sehr große Gefahr für die gesamte Menschheit.

Die Reduziereung dieser Gefahren ist nur durch die drastische Reduzierung der Kältemittelmenge in den Kälteanlagen erzielbar.

Wie schon erwähnt, besteht eine enge Beziehung zwischen der Entwicklung von Kältemitteln, Maschinen und Apparaten und der Regelung.

Aus diesem Grunde ist die Reduzierung der Kältemittelmenge in den Kälteanlagen nur durch gezielte Entwicklung einer neuartigen Regelung (Regelventile und Regler) mit gleichzeitiger Weiterentwicklung im Apparatesektor (Wärmeaustauscher, hauptsächlich Verdampfer) möglich.

Die Hauptursache für die großen Kältemittelmengen sind die Kreisläufe mit überfluteten Verdampfern gemäß Fig. 5 und 6). Diese müssen durch die Kreisläufe mit sogenannten "trockenen" Verdampfern (nur geringe Kältemittelmenge) ersetzt werden (siehe Fig. 7, 8).

Um die neuartigen "trockenen" Verdampfungsprozesse realisieren zu können, müssen folgende Komponenten neu entwickelt werden:
- die Stellorgane (Regelventile) und
- die dazugehörigen Regelkreise in elektronischer Ausführung
Als weiterer Schritt sollte die Regelung der trockenen Verdampfer in die System-Regelung integriert werden. Hier ist die Mehrpunktregelung (Einbeziehung von weiteren Regelparametern) für die energetische Optimierung (adaptive Regelverfahren) gemeint.

Die Kreisläufe mit der "trockenen" Verdampfung, die zusammen mit der FCKW-Technologie "mitentwickelt" worden sind, finden heute fast ausschließlich in dieser Kältemittelgruppe Anwendung.

Die Anwendung für Ammoniak ist aus folgenden Gründen begrenzt:
- Ammoniak weist eine sehr hohe spezifische Kälteleistung (kW/kg) auf, was zu sehr kleinen Strömungsquerschnitten der Drosselorgane (Expansionsventile) führt.
- Die sehr kleinen Querschnitte werden leicht durch den für Ammoniakanlagen ganz normalen Schmutz verstopft, was zu Betriebsstörungen führt.
- Das Wasser, das immer - wenn auch nur in kleinen Mengen - im Ammoniak gelöst ist, kann in den oben genannten kleinen Querschnitten bei der Drosselung ausfrieren und einen Beitrag zur Verstopfung der Ventile leisten.

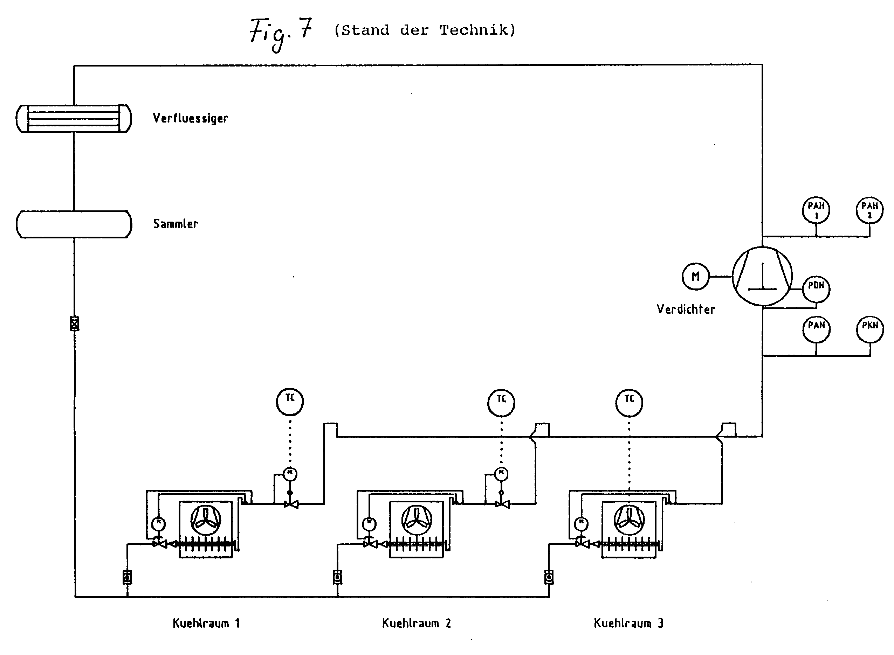

Einen typischen Kreislauf mit "trockener" Verdampfung gemäß Stand der Technik mit mechanischer Einzelgeräte-Regelung zeigt Fig. 7. Die einstufige Kälteanlage mit einem Verdichter dient zur Kühlung von drei Kühlräumen.

Die Speisung der Verdampfer in allen drei Kühlräumen ist durch mechanische, thermostatische Expansionsventile geregelt.

Die Temperatur im Kühlraum 3, die niedrigste von allen Kühlräumen, ist nicht kontinuierlich durch das Ein- und Ausschalten des Verdampferlüfters geregelt. Die Temperatur in den Kühlräumen 1 und 2 ist kontinuierlich durch die Anwendung der Saugdruckregler geregelt (Anhebung und Absenkung der Verdampfungstemperatur, abhängig von der thermischen Belastung der Kühlräume).

Die Verdichterleistung ist nicht kontinuierlich durch die Ein- und Ausschaltung des Verdichtermotors geregelt (Niederdruckschalter PKN).

Das noch nicht gelöste Hauptproblem der Anlagen mit den Kreisläufen mit der "trockenen" Verdampfung, ist die richtige Speisung der Verdampfer durch thermostatische Expansionsventile. Die durch die mechanische Konstruktion bedingten starren Kennlinien der bekannten Ventile und der Verdampfer lassen nicht zu, daß die Leistung des Systems Ventil/Verdampfer optimal genutzt werden kann.

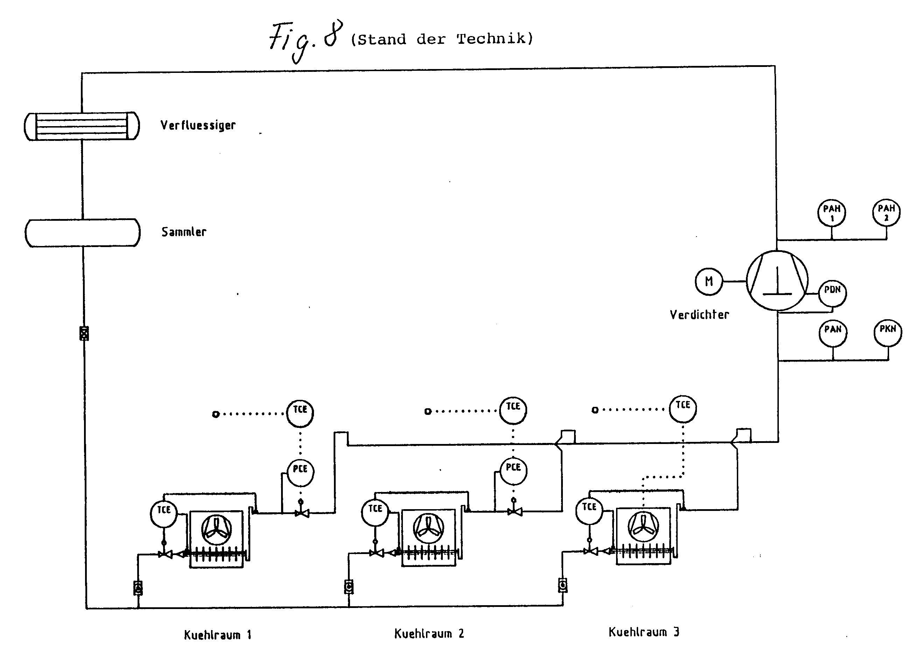

Eine erste Verbesserung der Verdampferspeisung wurde durch die Verwendung von mechanischen Expansionsventilen der üblichen Bauart mit "aufgesetztem" elektrischen Antrieb erreicht. Dieser Antrieb wurde von dem an ihn angekoppelten elektronischen Regler gesteueret, vgl. Fig. 8.

Es sind folgende Antriebsbauarten bekannt:
- 1. Thermisch: Firma Danfoss (DK), DE-AS 27 49 249,
DE-AS 27 49 250
Firma Singer (USA)
- 2. Schrittmotor: Firma Carrier (USA)
Firma Egelhof (D)
japanische Firmen
Außerdem finden spezielle Magnetventile in zeitgesteuertem On-Off-Betrieb (Puls-Modulation) Verwendung.
- 3. Magnetventil: Firma Danfoss (DK)
Firma Altech (USA)
Die Hauptkomponente der Ventile nach den DE-ASen 27 49 249 und 27 49 250 ist ein über einer Antriebsmembrane des Ventils angeordneter dichter Raum, gefüllt mit einem Medium im gesättigten Zustand. Die Temperatur dieses Mediums wird mit einem elektrischen Fühler gemessen und mit Hilfe eines durch einen Regler gesteuerten Heizelementes auf einem konstanten Wert gehalten.

Fig. 8 zeigt dieselbe wie in Fig. 7 gezeigte Kälteanlage, jedoch mit einer Variante der verbesserten Regelung. Die Regler (TCE) der elektronischen Verdampferspeisungsregelung besitzen zwei Temperaturfühler - einen am Kältemitteleintritt und einen am Kältemittelaustritt aus dem Verdampfer. Die Regler (TCE) der elektronischen Raumtemperaturregelung im Kühlraum 1 und im Kühlraum 2 wirken kontinuierlich auf die elektronisch gesteuerten Saugdruckregler (PCE). Der Raumtemperaturregler (TCE) im Kühlraum 3 wirkt kontinuierlich auf die Drehzahl des entsprechenden Verdampferlüfters. Die Regelung der Verdichterleistung ist dieselbe (Ein, Aus) wie bei der in Fig. 7 gezeigten Anlage.

Die Effizienz dieser Arten von Verdampferspeisung ist stark von der Art der eingesetzten Regler abhängig. Die unterschiedlichen Regler wurden entweder in der analogen oder der digitalen Technik realisiert.

Die besten der bekannten Lösungen der Verdampferspeisung dieser Art zeigen Verbesserungen im Vergleich zur mechanischen Regelung nach Fig. 7;die optimale Verdampferspeisungsregelung wurde bis jetzt noch nicht erreicht.

Die bisher bekannten elektronischen Einzelgeräte-Regelungen zeichnen sich durch folgende Unzulänglichkeiten aus:
a) Die verwendeten "altbewährten" mechanischen Ventilkonstruktionen (fester Sitz, Schließkegel oder Schließschieber) stellen keine Verbeserung dar (status quo).
b) Die Realisierung der Regler in der analogen Technik führt zu starren, anpassungsunfähigen Lösungen - jede ev. wünschenswerte Änderung ist sehr kostspielig und aus diesem Grunde oft undurchführbar.
c) Die Realisierung der Regler in der digitalen Technik ist in der Einzelgeräteregelung teuer. Die Durchführung einer allgemeinen Standardisierung zur Senkung der Produktionskosten ist sehr schwierig (Vielfalt von Lösungen).

Diese Unzulänglichkeiten und die hohen Preise (hohe Herstellungskosten der kleinen Serien) der bisher auf dem Markt angebotenen Lösungen hemmen die Anwendung.

Weil die gegenwärtigen Ventilkonstruktionen ohne Verbesserungen übernommen wurden, sind diese elektronischen Einzelgeräte-Lösungen nicht für die Ammoniakanlagen geignet (siehe obige Bemerkungen über Ammoniak).

Durch die US-A-2 241 086 ist ein Kühlgerät bekannt, bei dem ein elektronisch steuerbares Regelventil eingesetzt wird. Dieses Regelventil umfaßt ein Hauptrohr, das zwei als Einlaß und Auslaß ausgebildete Endstücke und ein dazwischen angeordnetes, rohrförmiges, elastisches Mittelstück aufweist. Zwischen dem elastischen Mittelstück und dem Hauptrohr befindet sich ein Füllungsmedium, dessen auf das elastische Mittelstück wirkender Druck von der Temperatur des Füllungsmediums abhängig ist. Zur Steuerung der Temperatur des Füllungsmediums ist ein Heizelement vorgesehen, das das Hauptrohr umgibt. Durch Veränderung der Temperatur des Füllungsmediums kann somit dessen Druck auf das elastische Mittelstück verändert werden, und dadurch wiederum kann die Form und damit der Strömungsquerschnitt dieses Mittelstückes verändert werden. Die bekannte Konstruktion nach der US-A-2 241 086 weist Nachteile auf sowohl bei Verwendung in einer Kälteanlage als auch in einer Wärmeanlage. Bei Verwendung für Kältemittel beeinflußt die Heizvorrichtung das Kältemittel besonders einströmseitig derart, daß Blasen entstehen. Hierdurch wiederum wird die Regelwirkung beeinträchtigt, ebenso der Wirkungsgrad der Gesamtanordnung. Bei einem Einsatz für Wärmeanlagen kann die Wärme nur schlecht aus dem Bereich des elastischen Mittelstückes, also des Ventiles abgeführt werden, wodurch die Regelung sehr träge wird.

Durch die US-A-4 303 100 ist ein für Bohrstränge vorgesehenes Absperrventil bekannt, dessen Schließkörper durch ein elastisches zylindrisches Teil gebildet wird, welches von außen mit Druck beaufschlagt ist, im Normalzustand geschlossen ist und durch den Druck des im Bohrstrang strömenden Mediums öffnet. Sobald dieser Strömungsdruck des Mediums nachläßt, schließt das Ventil automatisch.

Die Aufgabe der vorliegenden Erfindung besteht darin, ein Regelventil der eingangs genannten Art zu schaffen, das die Nachteile der bekannten Ventile nicht aufweist und das insbesondere preiswert herstellbar und nicht störanfällig ist, bei dem keine Verstopfungsgefahr besteht, das besser regelbar ist, mit dem die Verdampferspeiseregelung leichter optimierbar ist und mit dessen Einsatz in geregelten Systemen die erforderliche Kältemittelmenge erheblich reduzierbar ist.

Diese Aufgabe wird durch die Ausbildung gemäß Kennzeichen des Anspruchs 1 gelöst.

Vorteilhafte und zweckmäßige Weiterbildungen der erfindungsgemäßen Aufgabenlösung sind in den Unteransprchen gekennzeichnet.

Die mit der erfindungsgemäßen Aufgabenlösung und den Weiterbildungen nach den Unteransprüchen erzielbaren Vorteile werden bei der Beschreibung der Erfindung anhand der beigefügten Zeichnung beschrieben.

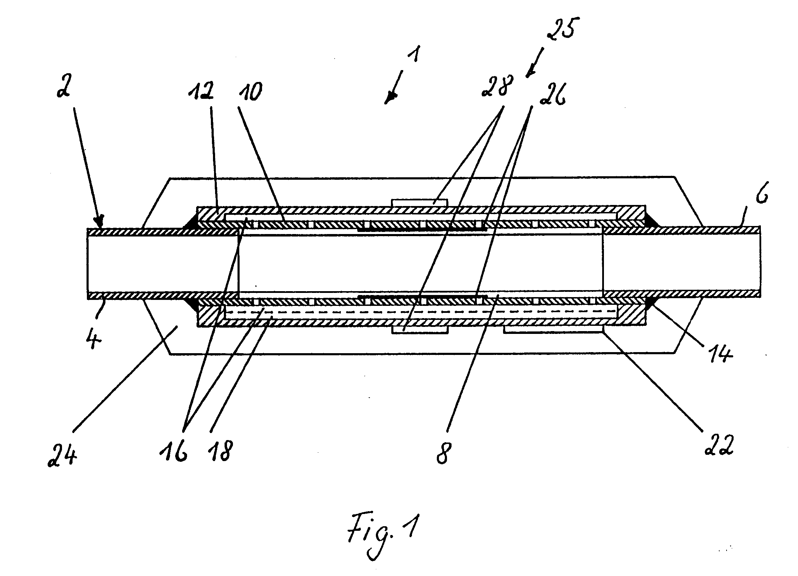

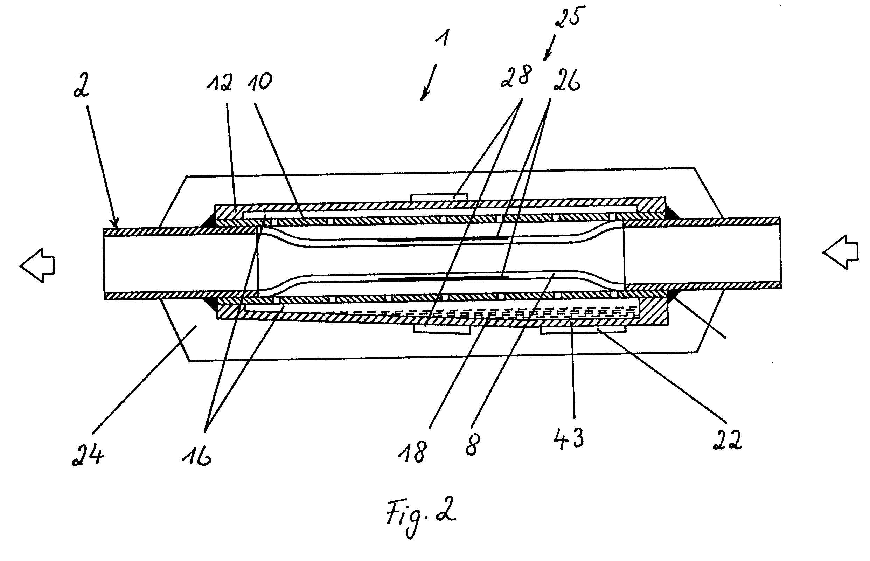

In der beigefügten Zeichnung zeigt
- Fig. 1: den prinzipiellen Aufbau eines erfindungsgemäßen Regelventils,
- Fig. 2: eine modifizierte Ausführungsform des Regelventils nach Fig. 1,

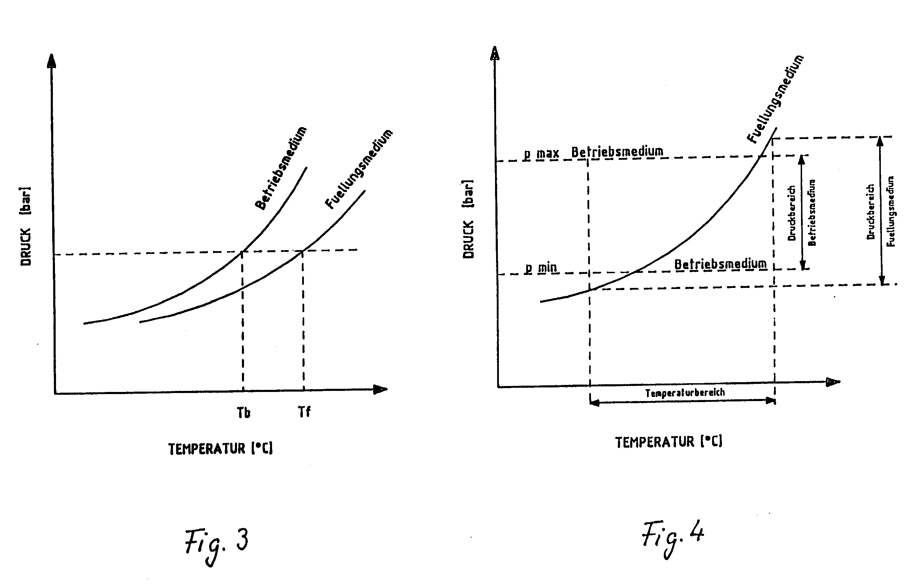

- Fig. 3 und 4: Dampfdruckkurven zur näheren Erläuterung der Funktionsweise des erfindungsgemäßen Regelventils,
- Fig. 5, 6, 7 und 8: herkömmliche Kälteanlagen, wobei die Anlage nach den Fig. 5 und 6 sogenannte Anlagen mit überfluteter Verdampfung und die Kälteanlagen nach den Fig. 7 und 8 sogenannte Anlagen mit trockener Verdampfung sind,

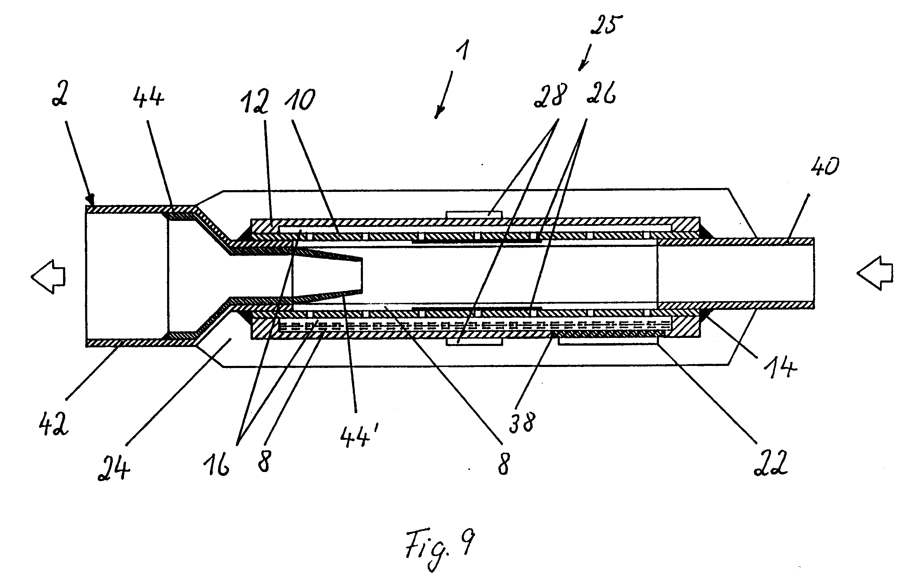

- Fig. 9: eine weitere Ausführungsform des erfindungsgemäßen Regelventils,

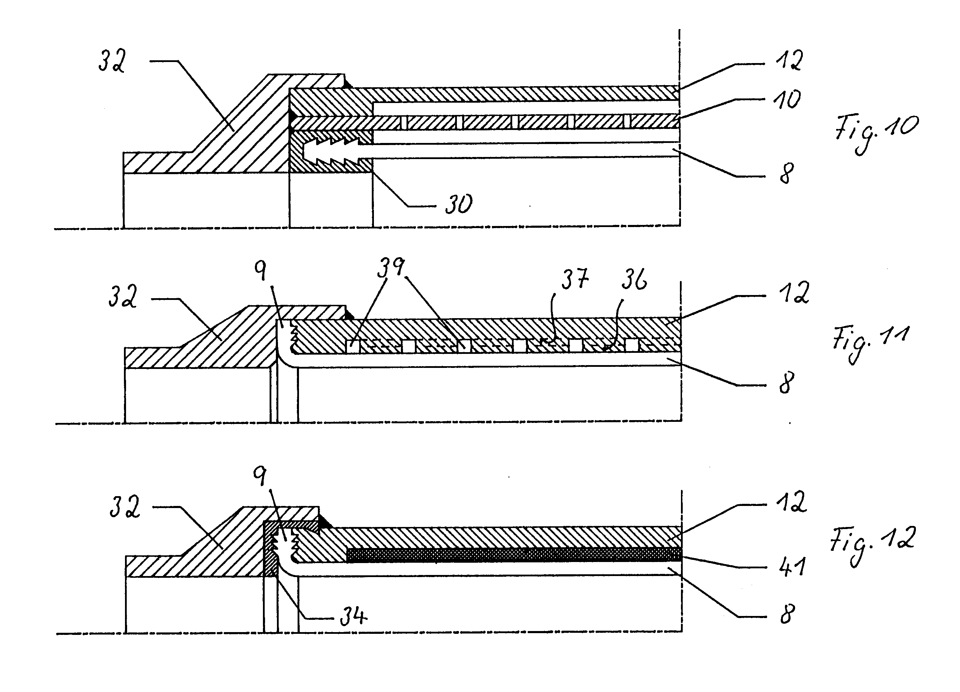

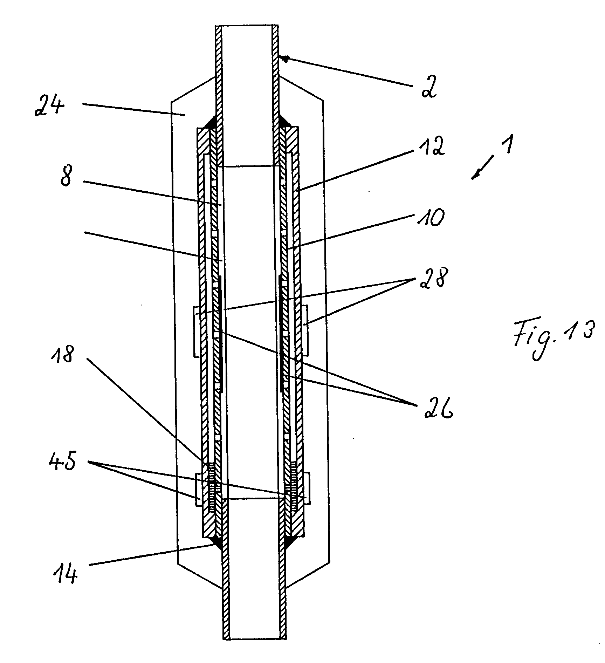

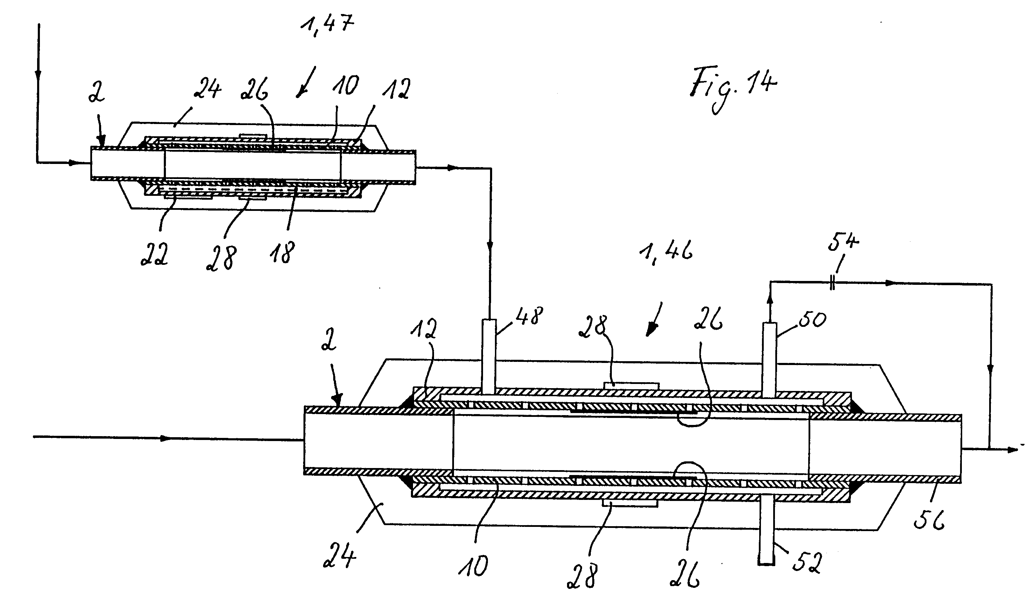

- Fig. 10, 11 und 12: weitere Modifikationen im Aufbau des erfindungsgemäßen Regelventils,
- Fig. 13: eine weitere Ausführungsform des erfindungsgemäßen Regelventils, insbesondere für den senkrechten Einsatz,

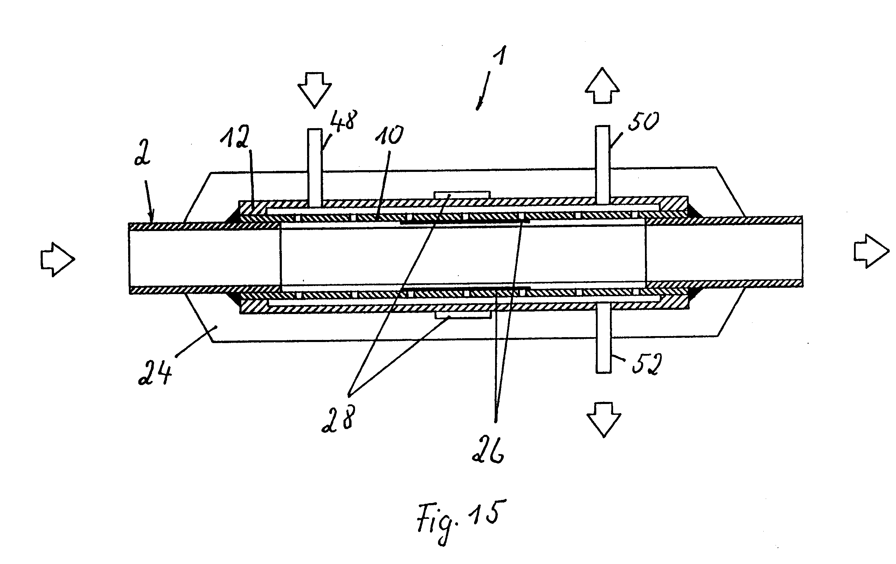

- Fig. 14 und 15: die Anwendung des erfindungsgemäßen Regelventils für große Leistungen in "Kaskade"-Anordnung als Pilotventil und Hauptventil,

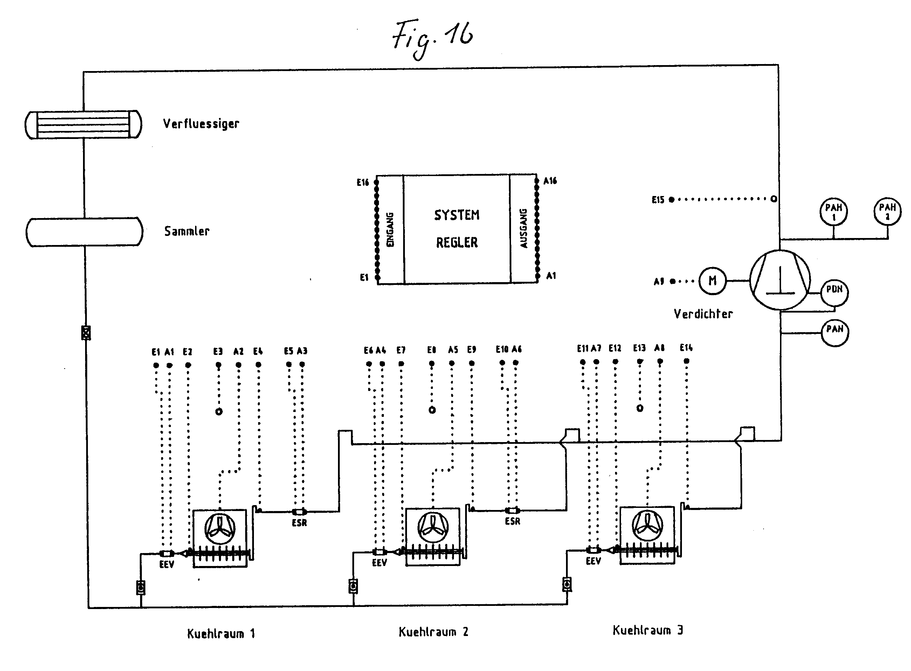

- Fig. 16: eine Anwendung des erfindungsgemäßen Regelventils in einer integrierten Systemregelung,

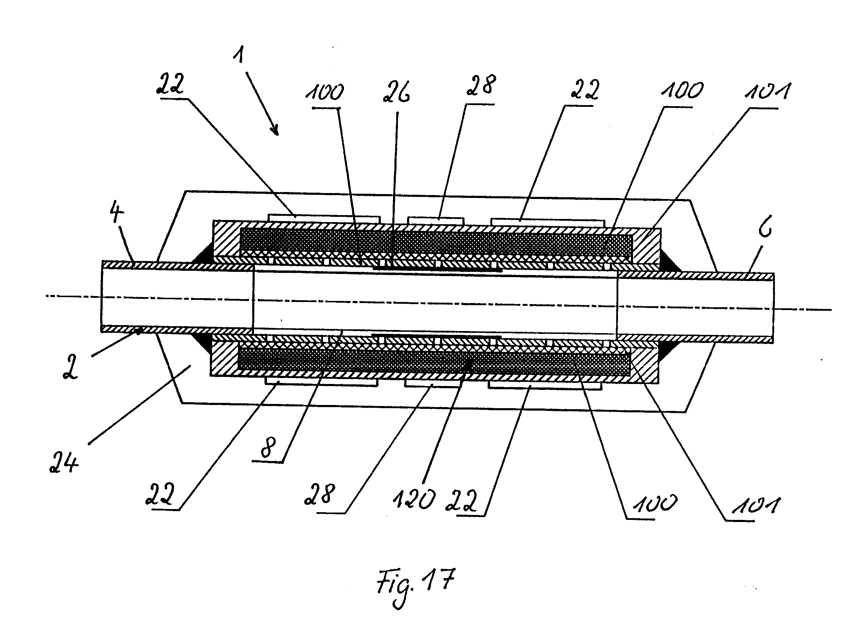

- Fig. 17 bis 23: weitere Ausführungsformen des erfindungsgemäßen Regelventils und

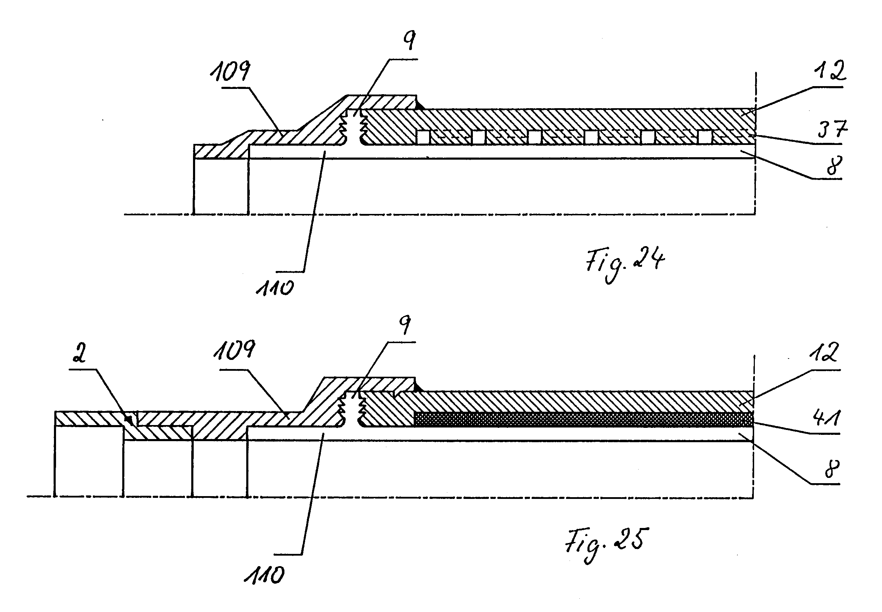

- Fig. 24 bis 29: weitere Modifikationen im Aufbau des erfindungsgemäßen Regelventils.

Aus Gründen der Vereinfachung sind in den Figuren der Zeichnung gleiche Bauteile mit den gleichen Bezugszeichen versehen.

Das Regelventil 1 besteht aus einem Hauptrohr 2, das zwei Endstücke 4, 6, die gleichzeitig die Einlaß- und Auslaßstutzen bilden können, und ein elastisches Mittelstück 8 von bestimmbarer Länge aufweist.

Das Mittelstück und die beiden Endstücke des Hauptrohres bilden eine Einheit, die dem inneren Druck des Betriebsmediums, welches durch das Hauptrohr strömt, ausgesetzt ist. Das Hauptrohr weist ferner ein gelochtes Stützrohr 10 auf, welches so angeordnet ist, daß das elastische Mittelstück gegen die Wirkung des inneren Druckes in Richtung nach außen abgestützt ist. Auf diese Weise kann das Hauptrohr mit seinem Mittelstück dem inneren Druck standhalten; die Form des elastischen Mittelstückes kann jedoch pneumatisch oder hydraulisch durch Druck von außen beeinflußt werden. Abhängig von dem Verhältnis der Größe des Druckes von außen zu der Größe des Druckes im Innern des Hauptrohres und von den Elastizitätseigenschaften des Mittelstückes, kann dieses entsprechend verformt werden, wodurch die Strömung durch das Regelventil beeinflußt werden kann.

Bei einem entsprechend geringen Wert des Druckes von außen wird das elastische Mittelstück durch die Wirkung des inneren Druckes gegen die innere Seite des Stützrohres gepreßt. In dieser Lage des Mittelstückes nimmt das Regelventil die Position "voll geöffnet" ein. Dank seiner besonderen Konstruktion ist der Druckabfall im Bereich des Regelventils, verursacht durch das durch das Regelventil strömende Betriebsmedium, sehr klein - vergleichbar mit dem Druckabfall in einem geraden Stück Rohr mit gleichen Maßen (Länge und Querschnitt) wie die des beschriebenen Regelventils.

Bei einem entsprechend großen Wert des Druckes von außen wird das elastische Mittelstück so zusammengepreßt, daß keine Strömung durch das Regelventil mehr möglich ist. In dieser Lage des Mittelstückes nimmt das Regelventil die Posistion "voll geschlossen" ein.

Abhängig von der relativen Größe des Außendruckwertes kann das Regelventil jede beliebige Position zwischen den Positionen "voll geöffnet" und "voll geschlossen" einnehmen. Entsprechend der eingenommenen Position des Regelventils wird der Massenstrom des durch das Ventil strömenden Betriebsmediums in den gegebenen Betriebsverhältnissen einen Wert zwischen den Werten "Maximum" und "Null" annehmen.

Um eine kontrollierte Einwirkung auf das elastische Mittelrohr zu gewährleisten, ist um das gelochte Stützrohr herum ein Mantelrohr 12 mit Abstand so angeordnet, daß es das Stützrohr 10 von der Umgebung (Atmosphäre) dicht abschließt, beispielsweise durch Schweißnähte 14 und daß zwischen dem Mantelrohr 12 und dem Mittelstück 8 ein Mantelraum 16 gebildet wird, der von innen durch das elastische Mittelstück 8 und von außen durch das Mantelrohr 12 abgeschlossen wird.

Bei dieser Ausbildung ist die Strömung durch das Regelventil von der Größe des Druckes im Mantelraum abhängig.

Der Druck im Mantelraum kann auf verschiedene Weise geregelt (aufgebaut und abgebaut) werden, wobei
grundsätzlich zwei unterschiedliche Vorgehensweisen vorgesehen sind:
1. - zeitweilige pneumatische (Dampf, Gas) oder hydraulische (Flüssigkeit) Verbindung des Mantelraumes mit außenstehenden Druckquellen von unterschiedlicher Größe, und
2. - die Erzeugung eines regelbaren Druckes im Mantelraum selbst.

Die Verbindung des Mantelraumes mit außenstehenden Druckquellen wird später beschrieben. Die Erzeugung eines regelbaren Druckes im Mantelraum selbst wird im folgenden beschrieben.

Der Mantelraum wird nach vorheriger Evakuierung (der Füllungsstutzen ist in der Fig. 1 nicht gezeigt) mit einem Medium gefüllt, welches sich bei den gegebenen Betriebsverhältnissen in einem gesättigten Zustand befindet.

Als Füllungsmedium ist z. B. Isobutan geeignet.

Das Füllungsmedium, bestehend aus dem flüssigen Teil (flüssige Phase) 18, der sich im unteren Teil des Mantelraumes ansammelt, und dem darüber befindlichen Dampf-Teil (Dampf-Phase) füllt den ganzen Mantelraum aus. Im gesättigten Zustand des Füllungsmediums ist der Druck im Mantelraum eine Funktion der Füllungsmediumtemperatur. Durch die Regelung der Füllungsmediumtemperatur läßt sich der Druck im Mantelraum entsprechend regeln.

Um eine störungsfreie Druckregelwirkung zu bewerkstelligen, soll die Dampfdruckkurve (p=f(t)) des Füllungsmediums von der Dampfdruckkurve des durch das Regelventil strömenden Betriebsmediums abweichen. Liegt diese Dampfdruckkurve (Fig. 3) rechts von der Dampfdruckkurve des Füllungsmediums, so wird sich der gleiche Druck des Füllungsmediums wie der Druck des durchströmenden Betriebsmediums erst bei einer höheren Füllungsmediumtemperatur (Tf) als der Betriebsmediumtemperatur (Tb) einstellen. Als Betriebsmedium sind beispielsweise die Kältemittel R12, R22 und R502, aber auch Ammoniak geeignet.

Sollte der Druck des Betriebsmediums bei gegebenen Betriebsverhältnissen weitgehend von der Temperatur des Betriebsmediums unabhängig sein (nicht gesättigter Zustand), so soll ein Füllungsmedium gewählt werden, dessen Dampfdruckkurve den vorgesehenen Druckbereich des Betriebsmediums im konstruktiv vertretbaren Temperaturbereich abdeckt (Fig. 4).

Die gewünschte Anpassung der Dampfdruckkurve des Füllungsmediums an die Dampfdruckkurve des Betriebsmediums kann man durch Wahl eines bestimmten, reinen Füllungsmediums (einzelner Stoff) oder eines Gemisches von unterschiedlichen Füllungsmedien (Mehrstoffgemisch) erreichen.

Soll die Temperatur des Füllungsmediums höher sein als die Temperatur des Betriebsmediums, so muß dem Füllungsmedium ständig eine bestimmte Menge an Energie (Wärme) zugeführt werden, um die Wärmeverluste der Füllung an die anliegende Umgebung auszugleichen. Die Energiezufuhr wird von einem in seiner Leistung regelbaren Heizelement 22 bewerkstelligt. Auf diesse Weise läßt sich eine beliebige Füllungsmediumtemperatur und dadurch ein beliebiger Betriebsmediumstrom durch das Regelventil einstellen. Das Heizelement beispielsweise in Form einer gekapselten Heizspirale, eines PTC-Elements oder einer anderen Konstruktion (z. B. eines Power-Transistors), kann unterschiedlich am Mantelrohr angebracht werden. Es kann:
- von außen, mit Gewährleistung eines guten Kontaktes, am Mantelrohr angebracht werden,
- einen integrierten Teil des Mantelrohres bilden,
- im Innern des Mantelraumes angebracht werden.

In den Fig. 1 und 2 ist die Anbringungsweise "von außen angebracht" gezeigt.

Um die Energieverluste (Wärmeverluste) zu begrenzen, wird die Verbindung des Mantelrohres 12 mit dem Hauptrohr 2 wärmeleitungshemmend ausgeführt und das Mantelrohr 12 wird auf der Außenseite mit einer wärmedämmenden Isolationsschicht 24 versehen (siehe Fig. 1).

Abhängig von den gestellten Regelungsaufgaben kann es von Vorteil sein, die jeweilige Lage (die Form) des elastischen Mittelstückes ermitteln und registrieren zu können (Erkennung des "Ventilhubes").

Die Messung der Lage (der sich ändernden Form) des elastischen Mittelstückes kann auf verschiedene Weise vorgenommen werden.

Die Fig. 1 zeigt ein induktives Meßprinzip 25. Mit der Außenwand des elastischen Mittelstückes ist eine zylinderförmige, elastische, magnetische Schicht 26 integriert ausgebildet. Abhängig von der Aufgabe kann diese Schicht Elemente (Partikel) aus einem Material mit schwachen (weiches Eisen) oder starken (permanenter Magnet) magnetischen Eigenschaften beinhalten.

An der Außenseite des Mantelrohres 12 ist eine Meßwicklung 28 angelegt. Diese Meßwicklung kann entweder als eine das Mantelrohr umgebende Spule (s. Fig. 1) oder als eine seitlich an das Mantelrohr angelegte Spule ausgebildet sein.

Die Änderungen der Lage (der Form) des Mittelstückes werden als Änderungen eines Magnetfeldes (Induktion) mit Hilfe eines entsprechenden Verfahrens gemessen und registriert.

Als eine andere Variante der Lage-Messung des elastischen Mittelstückes kann ein kapazitives Meßverfahren verwendet werden. Anstelle der Meßwicklung werden dann zwei (oder mehrere) kapazitive Meßelemente (Elektroden) am Mantelrohr angebracht, und die Schicht an der Außenseite des elastischen Mittelstückes wird aus einem der Kapazitätsmeßmethode entsprechenden Material gefertigt.

Die Änderungen der Lage (der Form) des Mittelstückes werden in diesem Falle als Änderungen eines elektrischen Feldes mit Hilfe eines entsprechenden Verfahrens gemessen und registriert.

Die in dem schematischen Funktions- und Aufbauprinzip gemäß Fig. 1 dargestellten und beschriebenen Ventilkomponenten können abhängig von der angewandten Fertigungstechnologie unterschiedliche Konstruktionsmerkmale aufweisen. Im folgenden sollen einige Konstruktionsvarianten anhand der weiteren Figuren beschrieben werden.

Das elastische Mittelstück 8 (Fig. 10) kann an beiden Enden in einen speziellen Metallring 30 eingewalzt werden. Das so vorgefertigte Mittelstück wird dann mit den übrigen Komponenten, wie Stützrohr 10, Mantelrohr 12 und Ventilstutzen 32 verschweißt.

Eine andere mögliche Lösung zeigt Fig. 11. Hier werden endseitige Ringflansche 9 des elastischen Mittelstückes 8 an der Stirnfläche des Mantelrohres 12 angelegt und zwischen dem Ventilstutzen 32 und dem Mantelrohr 12 dicht eingepreßt.

Eine dritte Variante zeigt Fig. 12. Hier werden endseitige Ringflansche 9 des elastischen Mittelstückes 8 zwischen einem speziell geformten Ring 34 und der Stirnfläche des Mantelrohres 12 dicht eingepreßt.

Die Wandstärke des elastischen Mittelstückes kann in Umfangsrichtung und/oder Längsrichtung unterschiedliche Werte aufweisen:
- radial konstant
- radial variabel (winkelabhängig)
Diese radialen Werte können dann auch:
- axial konstant oder
- axial variabel
gestaltet werden.

Die Gestaltung des gelochten Stützrohres 10 kann wie folgt sein.

Die Fig. 1 und 10 zeigen das gelochte Stützrohr 10 in der einfachen Form.

Das gelochte Stützrohr kann in das Mantelrohr 12 integriert werden (Fig. 11). Hier übernimmt eine spezielle Innenberippung 36 mit Querkanälen 37 des Mantelrohres die Stützfunktion für das elastische Mittelstück. Bei dieser Ausführungsform wird der Mantelraum durch die Querkanäle 37 gebildet. Der Dampf wird durch die Aussparungen 39 zwischen den Rippen hindurchgedrückt.

Bei einer anderen Ausführungsform gemäß Fig. 12 ist die innere Berippung durch eine spezielle poröse Schicht 41 aus Sintermaterial ersetzt. Hier wird der Mantelraum durch die Hohlräume des Sintermaterials gebildet. Der Dampf wird durch das Sintermaterial gedrückt.

Auch das Mantelrohr kann unterschiedlich ausgebildet sein. Die Fig. 1 und 10 zeigen die einfachste Form des Mantelrohres.

Der Mantelraum 16 liegt hier vorzugsweise exzentrisch im Verhältnis zu der Ventilachse (Mitte der Strömung). Er ist im unteren Teil größer ausgebildet als im oberen Teil. Im unteren Teil des Mantelraumes befindet sich die flüssige Phase des Füllungsmediums.

Um die Abhängigkeit der Ventilfunktion von der Einbaulage des Ventils zu verringern, ist in einer anderen Variante das Mantelrohr wenigstens teilweise exzentrisch zur Ventilachse (Strömungsmitte) geformt, so daß der flüssige Teil der Füllung, der beheizbar sein soll, auch in Schräglagen des Ventils in einer Art Flüssigkeitssack 43 immer mit dem beheizten Teil des Mantelrohres in Kontakt bleibt, vgl. Fig. 2.

Sollte das Ventil nur für senkrechten Einbau vorgesehen werden, so kann das Mantelrohr 12 konzentrisch zur Ventilachse angeordnet werden. In diesem Falle ist es zweckmäßig, das Heizelement in einer Ringform 45 am unteren Teil des Mantelrohres (dort, wo die flüssige Phase des Füllungsmediums sich befindet) anzubringen, vgl. Fig. 13.

Um den Wärmewiderstand des Mantelrohres 12 an der Stelle, an der das Heizelement anliegt, zu verringern, kann ein spezielles, gut wärmeleitendes Element 38 in das Mantelrohr integriert werden, vgl. Fig. 9.

Die Lage des Heizelements kann verschieden gewählt werden.

Wird das Regelventil als Expansionsventil verwendet, so entsteht, hervorgerufen durch den Drosselvorgang, ein starkes Temperaturgefälle im Ventil. Um die Wärmeverluste des Heizelements zu verringern, ist es zweckmäßig, dieses Element in der Nähe des Strömungseintritts in das Ventil anzuordnen, Fig. 2.

Bei der Anwendung als Expansionsventil kann der Eintrittsstutzen 40 des Regelventils einen kleineren Querschnitt haben als der Austrittssutzen 42, vgl. Fig. 9.

Bei Verwendung als Expansionsventil entsteht im Ventil ein Druckgefälle, das bei bestimmten Betriebsverhältnissen einen großen Wert annehmen kann. Um die Beanspruchung des elastischen Mittelstückes zu mindern, kann am Austritt der Strömung aus dem Ventilgehäuse ein Einsatz 44 mit einem kegelförmigen Stützring 44' eingebaut werden, vgl. Fig. 9.

Abhängig von dem Anwendungsbereich können die Ventilteile aus Metall, Kunststoffen oder Glas gefertigt werden.

Das elastische Mittelstück 8 kann abhängig vom Anwendungsbereich aus unterschiedlichen elastoplastischen Stoffen in reiner (ein Stoff), laminierter (Schichtbauweise, mehrere unterschiedliche Stoffe) oder armierter (unterschiedliche Stoffe und Formen in Verbundbauweise) Form gefertigt werden.

Bei Anwendungen für große Leistungen kann es zweckmäßig sein, das "Kaskade"-Prinzip Pilotventil 47 / Hauptventil 46 zu verwenden (Fig. 14). Hierbei entfällt in der Bauform als Hauptventil die Füllung und das Heizelement. Der Mantelraum wird zusätzlich mit einem oder mehreren Stutzen 48, 50, 52 versehen, vgl. Fig. 14 und 15).

Bei diesem Prinzip wird die Hauptströmung des Betriebsmittels durch das Hauptventil 46 geleitet. Der Mantelraum 16 des Hauptventils (Fig. 14 und 15) wird mit einem Raum von hohem Druck (Pilotventil 47) und einem Raum mit niedrigem Druck (Ausgang 56 des Hauptventils) verbunden. Abhängig von der Verbindungsart mit diesen beiden Räumen kann der Druck im Mantelraum entsprechend geregelt werden, wodurch auch die Regelung der Betriebsmittelströmung durch das Hauptventil erfolgt. Die Stutzen des Mantelraumes des Hauptventils (Fig. 15) gewährleisten die Anwendung des Hauptventils in verschiedenen Regelungsvarianten.

Eine dieser Varianten zeigt Fig. 14. Hier wird die Verbindung mit einem Hochdruckraum durch ein Regelventil 47 der beschriebenen neuen Art, aber mit kleinerer Leistung als das Hauptventil 46, geregelt. Die Verbindung mit dem Niederdruckraum erfolgt durch eine starre Leitung, die mit einer Drosselstelle 54 mit kleinem Querschnitt (Blende) versehen ist (Fig. 14).

Bei voll geschlossenem Regelventil 47 herrscht im Mantelraum derselbe Druck wie am Austritt 56 des Hauptventils 46 - das Hauptventil nimmt die Position "voll geöffnet" an.

Bei entsprechender Öffnung des Regelventils nimmt das Hauptventil eine mehr oder weniger "teilgeschlossene" Position ein.

Diese Art der Regelung ist für große Leistungen vorgesehen. Das kleine Regelventil benötigt eine kleinere Steuerleistung (Heizenergie) als die für die Steuerung des Hauptventils notwendige Steuerleistung.

Das beschriebene Regelventil kann vorzüglich in der Kältetechnik auch für sehr kleine Leistungen (Kühl- und Klimaschränke, Gefriertruhen) eingesetzt werden und mit Vorteil auch für Klimaanlagen, insbesondere im Kfz-Bau.

Es ist speziell für neuartige Ammoniakanlagen mit Kreisläufen mit "trockener" Verdampfung geeignet.

Es ist aus allen geeigneten Materialien und auch in Spezialausführungen aus Glas und Kunststoffen herstellbar, speziell für hochkorrosive Betriebsmedien.

Das neue Regelventil ist besonders gut geeignet zur Anwendung in einer integrierten Systemregelung.

Fig. 16 zeigt eine Ausführung dieser Regelung für eine einstufige Kälteanlage mit drei Kühlräumen.

Die Regelung ist mittels eines digitalen Systemreglers gewährleistet. Die 16 Eingänge und die 16 Ausgänge sind entsprechend mit E1 bis E16 und A1 bis A16 bezeichnet. Alle Bezeichnungen sind auf den Standpunkt des Reglers bezogen (Eingang zum Regler und Ausgang aus dem Regler).

Die Verdampferspeisung des Kühlraums 1 erfolgt über das neue beschriebene Regelventil (EEV-Elektronisches Expansions-Ventil). Die Hubmessung erfolgt bei E1 und die Temperaturmeßstellen am Verdampfer befinden sich bei E2 und E4. Diese Eingänge E1, E2 und E4 liefern dem Verdampferspeisung-Regler die benötigten Informationen. Die von diesem Regler ausgehende Regelgröße wird vom Ausgang A1 dem Ventil (EEV) zur Regelung der Heizleistung zugeführt.

Die Temperaturregelung des Kühlraumes 1 erfolgt durch die Lüfterregelung und die durch den Einsatz des neuen Regelventils (ESR-Elektronisches Saugdruck-Regler) realisierte Saugdruckregelung. Die Raumtemperatur (E3) und die Hubmessung (E5) bilden die Eingänge zum Regler; Lüfteranschluß (A2) und die Ventilheizung (A3) sind am Ausgang des Reglers angeschlossen. Die kombinierte Lüfter- und Ventilsteuerung gewährleistet eine energetisch-optimale Kühlraumtemperaturregelung.

Die Regelung des Kühlraumes 2 ist identisch mit der des Kühlraums 1, jedoch hat die Kühlraumtemperatur 2 einen niedrigeren Wert als die Kühlraumtemperatur 1. Die entsprechenden Eingänge sind E6 bis E10 und die Ausgänge A4 bis A6.

Die Regelung der Verdampferspeisung im Kühlraum 3 ist identisch mit der Regelung von Kühlraum 1 und 2. Die entsprechenden Eingänge sind E11, E12, E14 und der Ausgang A7.

Die Raumtemperatur im Kühlraum 3 ist niedriger als in den Kühlräumen 1 und 2. Diese Temperatur wird durch die Lüfterregelung und die Saugdruckregelung gewährleistet. Die Saugdruckregelung wird durch die Drehzahlregelung des Verdichtermotors realisiert. Der entsprechende Eingang ist E13, und die Ausgänge sind A8 und A9.

Die Kontrolle der Verdichtungsendtemperatur wird dem Temperaturmeßeingang E15 zugeordnet.

Durch die anhand der Fig. 16 beschriebene System-Regelung ist unter Anwendung des erfindungsgemäßen Regelventils eine optimale Nutzung der in einer Kälteanlage vorhandenen Leistung der Wärmeaustauscher erreichbar in Verbindung mit qualifizierten Reglern einer integrierten, digitalen System-Regelung. Hierdurch gelingt es, die effektiven Nutzungskosten einer Kälteanlage zu minimieren.

Das beschriebene Regelventil ist praktisch frei von Toträumen. Es ist daher vorzüglich für beliebige Flüssigkeiten und Gase einsetzbar, beispielsweise in der Verfahrenstechnik und der Getränkeindustrie.

Bei der Anwendung des beschriebenen erfindungsgemäßen Regelventils als Expansionsventil (Drosselventil) für Kälteanlagen sollte das ausströmende flüssige Kältemittel (Ventil-Eintritt) vor der Drosselstelle nicht erwärmt werden. Eine Erwärmung des wenig unterkühlten flüssigen Kältemittels kann zu Blasenbildung führen, und dadurch kann es zu Störungen in der Durchströmung des Ventils kommen, was eine Minderung der volumetrischen Leistung zur Folge hat.

Es werden daher Maßnahmen zur Verringerung des Wärmeübergangs von den warmen, im Bereich der Heizelemente liegenden Teilen des Ventils an die Eintrittszone des Ventils getroffen, wie dies anhand der Fig. 17 bis 29 näher beschrieben werden soll.

Die Maßnahmen zur Verringerung des erwähnten Wärmeübergangs bestehen insbesondere in der Verwendung einer Adsorptions-Füllung 100, die in den Mantelraum 16 des Ventils eingebracht wird. Diese Adsorptions-Füllung 100 besteht aus einem Adsorptionsstoff (z. B. Aktivkohle, Zeolith), der teilweise oder vollständig mit einem Gas (z. B. Kohlendioxid) gefüllt ist. Die Füllung des Mantelraumes erfolgt derart, daß der mit Adsorberstoff gefüllte Mantelraum zunächst zum Entfernen aller Gase evakuiert wird und dann mit einem dem Adsorberstoff entsprechenden Gas unter einem bestimmten Druck gefüllt wird. Eine solche Adsorptions-Füllung (Adsorptionsstoff / Gas-Füllung) verhält sich in entsprechenden Druck-Temperatur-Bereichen ähnlich wie die Flüssigkeit / Dampf-Füllung im gesättigten Zustand gemäß Fig. 3 und 4. Einer bestimmten Temperatur der Adsorptionsfüllung entspricht ein bestimmter Gasdruck. Dieser Druck wird anders als bei den vorherigen Ausführungsformen auf das elastische Mittelstück 8 des Ventils nicht vom Dampf der Füllungsflüssigkeit, sondern von dem erwärmten bzw. überhitzten Gas ausgeübt. Es ergibt sich hierbei überdies der Vorteil, daß wegen des wesentlich schlechteren Wärmeüberganges dem elastischen Mittelstück 8 weniger Wärme zugeführt wird. Die vorgeschlagene Adsorptions-Füllung ist universell für alle Anwendungen einsetzbar.

Die Fig. 17 zeigt das Prinzip der Adsorptions-Füllung. Die Adsorptions-Füllung 100 ist von dem gelochten Stützrohr 10 noch durch eine Schicht 101 aus Sintermaterial getrennt, die zusammen mit den Durchbrüchen im Stützrohr einen Gasraum 93 bildet.

Diese Schicht 101, die für den Adsorptionsstoff undurchlässig, jedoch für das Gas durchlässig ist, verhindert die Verlagerung des Adsorptionsstoffes an unerwünschte Stellen im Ventil. Die Heizelemente 22 sind an der Außenseite des Mantelrohres plaziert und bilden zusammen mit der Adsorptions-Füllung 100 einen "Druck-Generator" 120.

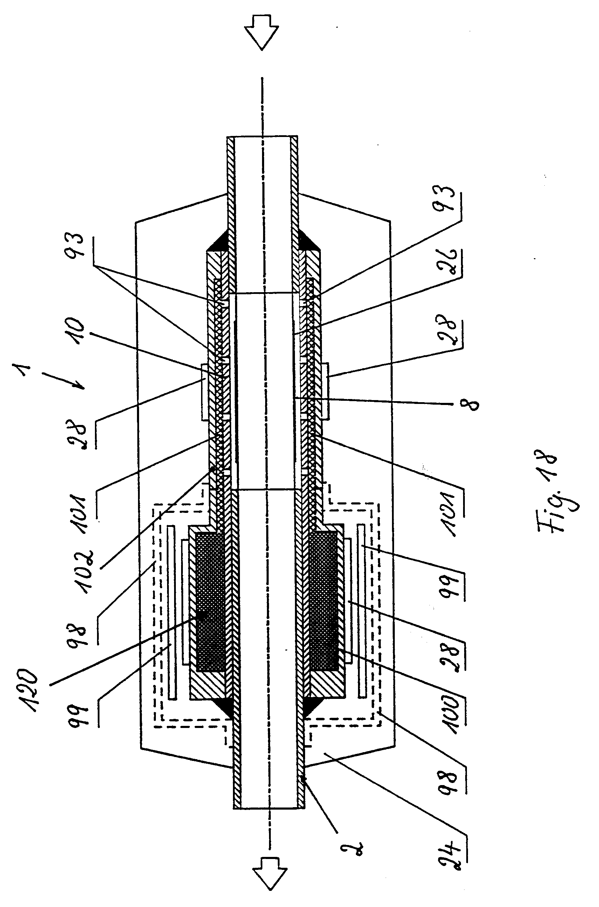

Die Fig. 18 zeigt die Verlagerung der "warmen Zone", nämlich des Druckgenerators 120 des Ventils in Strömungsrichtung gesehen hinter die Drosselstelle (elastisches Mittelstück 8) . Das Mantelrohr 12 ist im Bereich des elastischen Mittelstückes aus schlecht wärmeleitendem Material 102 gefertigt. Die Funktion des gelochten Stützrohres 10 kann durch am Mantel ausgebildete Rippen mit Querkanälen oder durch eine Schicht aus Sintermaterial übernommen werden. Zusätzlich können Wärmerückführungselemente 98 vorgesehen werden, beispielsweise in Form von Blechen, die die Heizelemente und die Adsorptions-Füllung überbrücken, so daß Wärme vom Ende der Drosselstelle zum Ventilausgang abgeleitet wird.

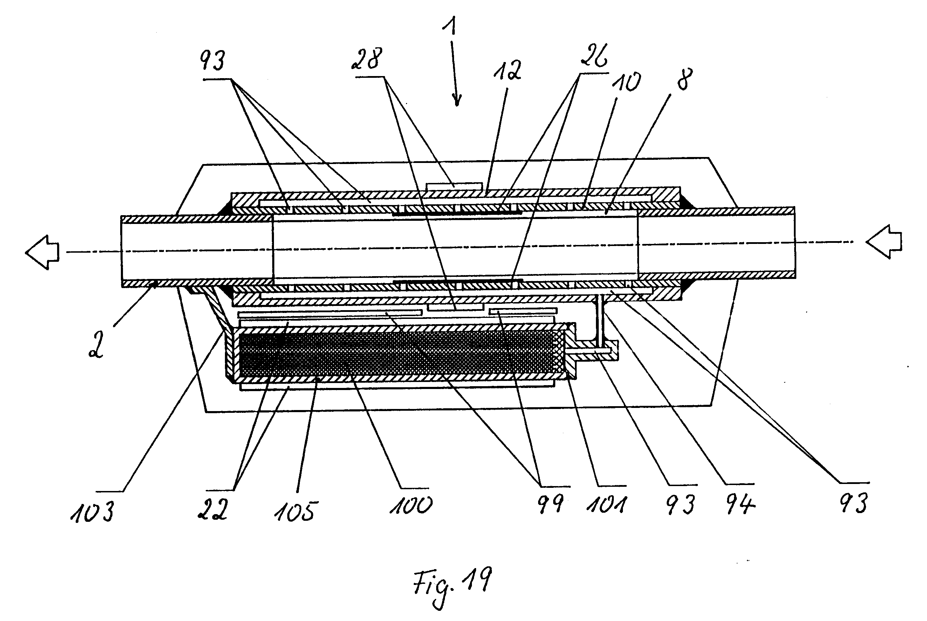

Die Fig. 19 zeigt eine Ausbildung, bei der der Druckgenerator 120 (Heizelement 22 und Adsorptions-Füllung 100) nicht mehr unmittelbar am Ventil, sondern beabstandet seitlich dazu angeordnet ist und mit Hilfe einer Lasche 103 mit dem Ventilausgang (kalte Seite) verbunden ist. Die Adsorptions-Füllung 100 ist über eine Rohrverbindung 104 mit dem Mantelraum 16 verbunden. Der Druckgenerator befindet sich noch in der Isolierung 24 des Ventils. In der Isolierung zwischen Druckgenerator 120 und Mantelrohr 12 des Ventils können Luftschlitze 99 ausgebildet sein, über die Wärme leichter an die Umgebung abgeführt wird, wodurch die Wärmeübertragung auf das Ventil verringert werden kann. Die Adsorptions-Füllung 100 und die Sinterschicht 101 befinden sich in einem Behälter 105, der mittels einer Lasche mit der Austrittsseite des Ventils verbunden ist. Die Lasche hat nicht nur eine Funktion als Halterung, sondern dient auch zur Kühlung. Zur Anhebung des Druckes muß nämlich die Adsorptions-Füllung durch die Heizelemente 22 erwärmt und zur Senkung des Druckes durch Ableitung der Wärme an die kalten Teile gekühlt werden. Die gewünschte Kühlfunktion wird durch eine entsprechende Form und Materialwahl für die Lasche 103 erreicht.

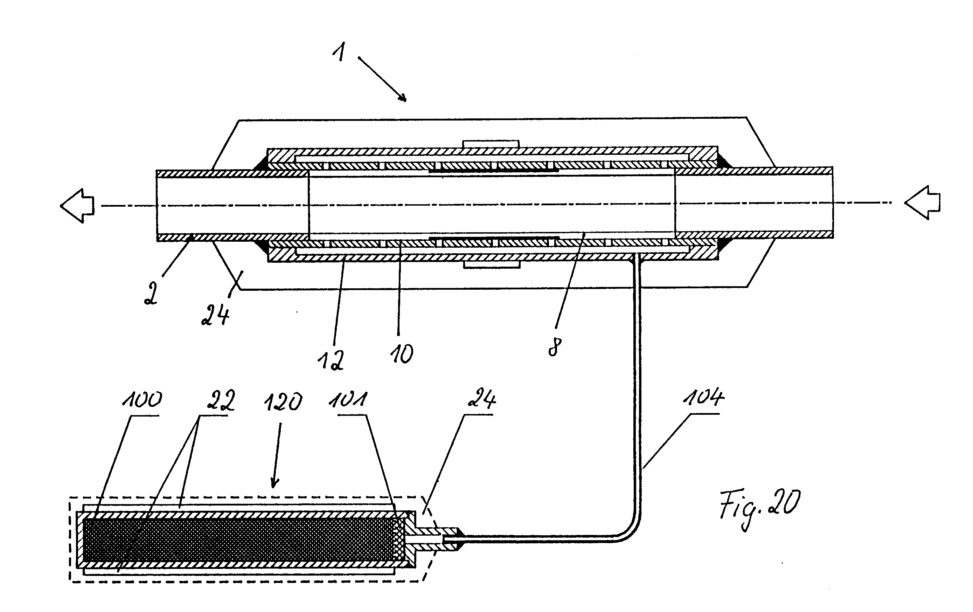

Die Fig. 20 zeigt eine Modifikation der Ausbildung des Ventils nach Fig. 19. Hier befindet sich der Druckgenerator 120 entfernt vom Ventil. Die Druckverbindung ist durch eine Rohrleitung 104 (Kapillarrohr) hergestellt.

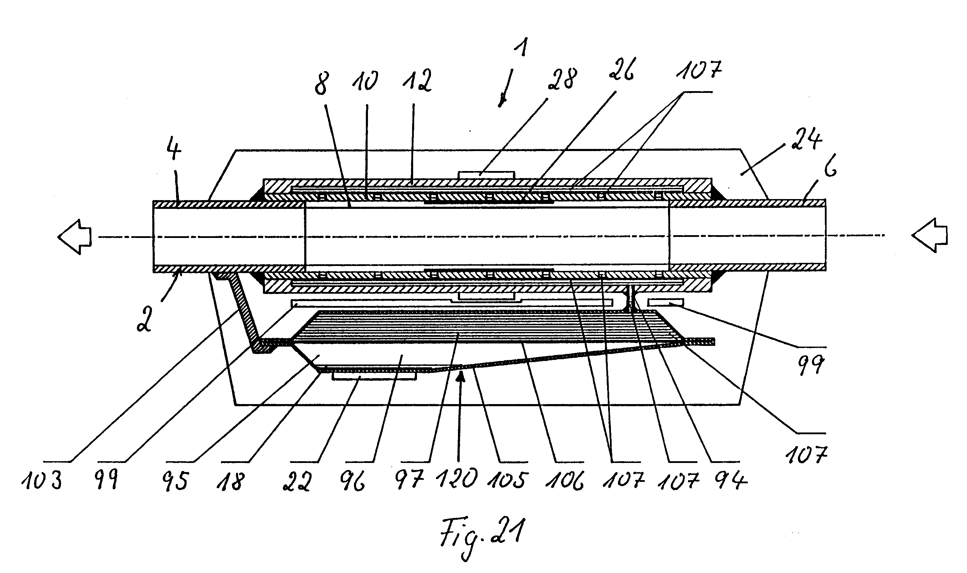

Die Fig. 21 zeigt eine andere Ausführungsform des Ventils, bei der die Druckübertragung auf das elastische Mittelstück 8 durch eine spezielle, hydraulische Flüssigkeit 107 über eine Rohrverbindung 94 erfolgt. Die hydraulische Flüssigkeit 107 befindet sich in einer oberen Kammer 97 eines unterhalb des Ventils angeordneten Behälters 105, die mittels einer elastischen Membran 106 von einer unteren Kammer 96 des Behälters 105 getrennt ist, in der sich die Flüssigkeit 18 und der Dampfraum 95 befinden und die vom Heizelement 22 aufheizbar ist. Die hydraulische Flüssigkeit, z. B. ein spezielles Öl, ist schlecht wärmeleitend. Das Volumen der Flüssigkeit oberhalb der Membran 106 ist so bemessen, daß seine Verlagerung für das Zusammendrücken des elastischen Mittelstückes und dadurch zum Schließen des Ventils ausreicht. Der Druckgenerator 120 (Behälter mit hydraulischer Flüssigkeit, Füllungsflüssigkeit, Dampfraum und Heizelement) ist hier ähnlich wie bei der Ausbildung nach Fig. 19 parallel zu der eigentlichen Ventileinheit angeordnet. Der Behälter 105 ist wiederum mittels einer Lasche 103 mit dem Ventilausgang verbunden. Die Lasche 103 hat dieselbe Funktion wie bei der Ausführungsform nach Fig. 19. Bei dieser Ausführungsform nach Fig. 21 können ebenfalls Luftschlitze 99 vorgesehen sein wie bei der Ausführungsform nach Fig. 19.

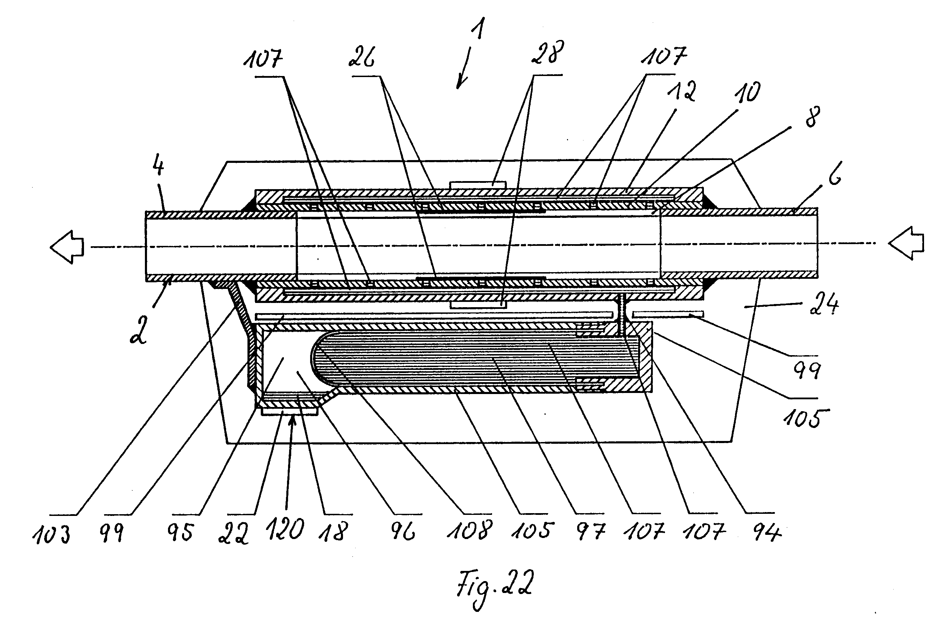

Die Fig. 22 zeigt eine andere Form der hydraulischen Druckübertragung. Die Trennung der hydraulischen Flüssigkeit von der Flüssigkeit / Dampf-Zone erfolgt hier durch einen einseitig verschlossenen elastischen Schlauch 108 anstelle der Membran bei der Ausführungsform nach Fig. 21. Ansonsten entspricht diese Ausführungsform im wesentlichen der Ausführungsform nach Fig. 21, wobei der Behälter 105 vorzugsweise zylindrisch ausgebildet ist.

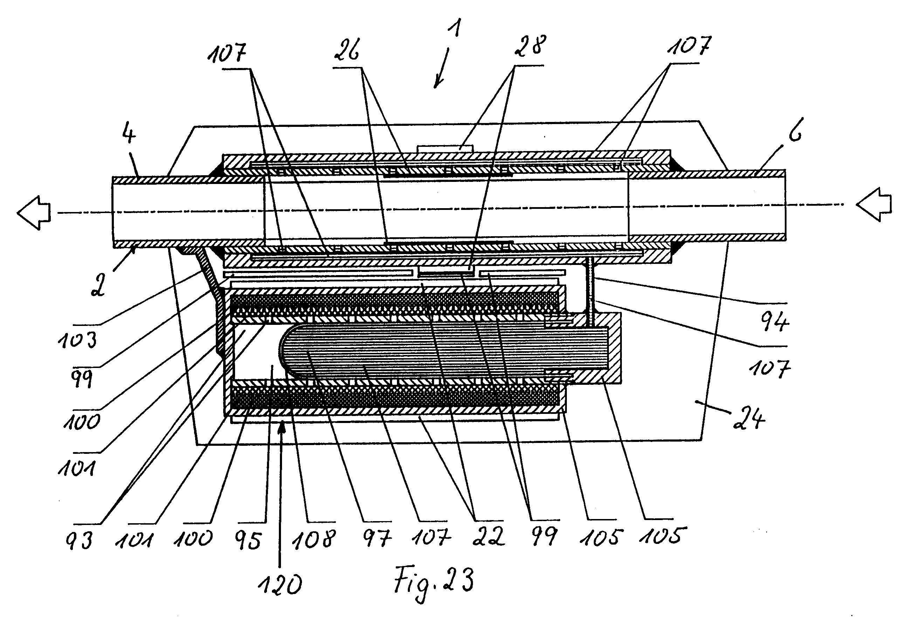

Die Fig. 23 zeigt dieselbe hydraulische Druckübertragungsform wie die Fig. 22, nur daß anstelle der Füllungsflüssigkeit und des Dampfraumes eine Adsorptions-Füllung mit Gasraum 93 nach Fig. 17 verwendet wird.

Die Fig. 24 zeigt eine Anordnung zur Minderung des Wärmetransports in die Längsrichtung. Das schlecht wärmeleitende, elastische Mittelstück 8 weist hier eine über den Ringflansch 9 hinausgehende Verlängerung 110 auf und liegt außerhalb des Mantelrohres 12 in einem speziell geformten Stutzen 109. Das Mantelrohr 12 hat die früher beschriebene Rippenform.

Die Fig. 25 zeigt eine ähnliche Anordnung wie die Fig. 24. Hier ist ein Teil des Stutzens 109 aus einem schlecht wärmeleitenden Material gefertigt. Der Mantelraum ist mit einem Sintermaterial 41 gefüllt analog wie bei der Ausführungsform nach Fig. 12.

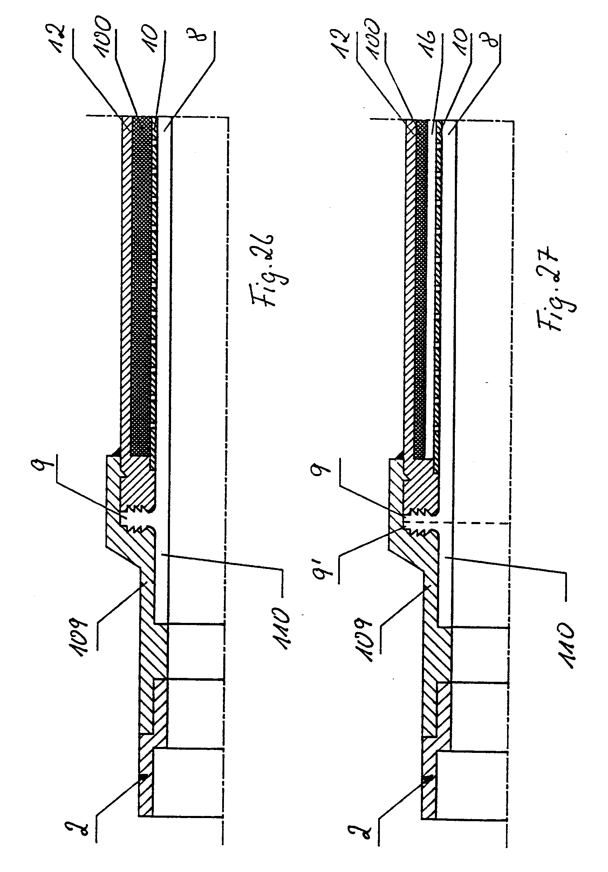

Die Fig. 26 zeigt eine Anordnung ähnlich wie in den Fig. 24 und 25, allerdings mit einer Adsorptions-Füllung 100 analog den Ausführungsformen nach den Fig. 17 bis 20 und 23.

Die Fig. 27 zeigt eine Anordnung ähnlich wie die Anordnung nach Fig. 26. Die Adsorptions-Füllung 100 nimmt hier nur einen Teil des Mantelraumes 16 ein. Die Verlängerung 110 ist hier als separates Teil ausgebildet und weist einen Ringflansch 9' auf, der mit Hilfe des Stutzens 109 dicht an den Ringflansch 9 angepreßt wird.

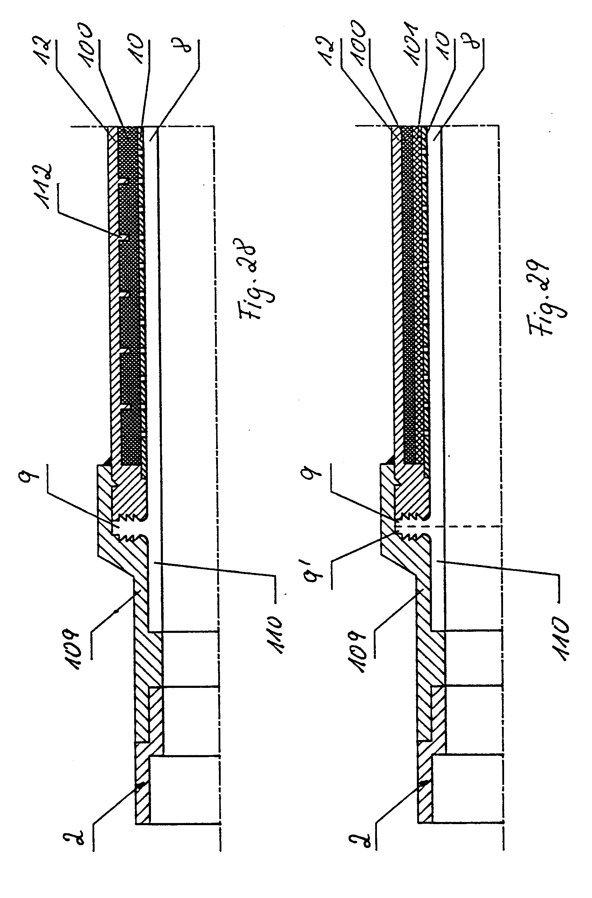

Die Fig. 28 zeigt eine Anordnung ähnlich der nach Fig. 26. Hier ist das Mantelrohr 12 zwecks besserer Wärmeübertragung vom Heizelement auf die Adsorptions-Füllung 100 mit Rippen 112 versehen.

Die Fig. 29 zeigt eine Anordnung analog der nach Fig. 27. Hier ist die Trennschicht 101 aus Sintermaterial gemäß Fig. 17 zwischen der Adsorptions-Füllung 100 und dem gelochten Stützrohr 10 vorgesehen. Die Trennschicht 101 ist für das Gas der Adsorptions-Füllung durchlässig, für die Partikel des Adsorptionsstoffes jedoch undurchlässig.

## Patentansprüche

1. Elektronisch steuerbares Regelventil mit einem Hauptrohr (2), das zwei als Einlaß und Auslaß ausbildbare Endstücke (4, 6) und ein dazwischen angeordnetes rohrförmiges elastisches Mittelstück (8) aufweist, das von einem in sich abgeschlossenen Mantelraum (16) umgeben ist und zur Veränderung seiner Form und damit des Strömungsquerschnittes von diesem Mantelraum (16) aus mit Druck beaufschlagt ist, welcher mit einem Füllungsmedium gefüllt ist, dessen Druck von der Temperatur des Füllungsmediums abhängig, jedoch von der Volumenänderung des Mantelraumes unabhängig ist und mit einem steuerbaren Heizelement (22) in Wirkverbindung steht, **dadurch gekennzeichnet**, daß zur Messung der Formänderung des rohrförmigen, elastischen Mittelstückes (8) ein induktiver oder kapazitiver Geber (25) vorgesehen ist, und daß die einen Druckgenerator bildende Einrichtung aus dem Heizelement (22) und dem Füllungsmedium (18, 100) wärmemäßig getrennt vom elastischen Mittelstück (8) angeordnet ist und mit einer Wärmeabführungseinrichtung (98, 102) in Wirkkontakt steht.

2. Regelventil nach Anspruch 1, **dadurch gekennzeichnet**, daß das Füllungsmedium (18) aus wenigstens einem Medium im gesättigten Zustand mit jeweils einer flüssigen und einer dampfförmigen Phase und/oder aus einer Adsorptions-Füllung (100) mit wenigstens einem Stoffpaar, bestehend aus wenigstens einem Sorptionstoff und wenigstens einem Gas, besteht, von denen wenigstens eines vom Sorptionsstoff adsorbierbar ist.

3. Regelventil nach Anspruch 1 oder 2, **dadurch gekennzeichnet**, daß es wenigstens im Bereich eines den Mantelraum (16) umgebenden Mantelrohres (12) von einer Isolierung (24) umgeben ist.

4. Regelventil nach Anspruch 2, **dadurch gekennzeichnet**, daß das Füllungsmedium (18) Isobutan ist.

5. Regelventil nach Anspruch 2, **dadurch gekennzeichnet**, daß das Füllungsmaterial Aktivkohle und/oder Zeolith und das Gas Kohlendioxid ist.

6. Regelventil nach Anspruch 1, **dadurch gekennzeichnet**, daß die beiden Enden des elastischen Mittelstückes (8) jeweils in einem Metallring (30) dicht eingebettet sind, die zusammen mit einem das Mittelstück (8) umgebenden, gelochten Stützrohr (10) und dem Mantelrohr (12) mit den Ventilstutzen (32) verbunden sind.

7. Regelventil nach Anspruch 1 oder 6, **dadurch gekennzeichnet**, daß das rohrförmige elastische Mittelstück (8) beidendig nach außen zeigende Ringflansche (9) aufweist, die zwischen Mantelrohr (12) und/oder Stützrohr (10) einerseits und Ventilstutzen (32) andererseits dicht eingepreßt sind.

8. Regelventil nach Anspruch 7, **dadurch gekennzeichnet,** daß die Ringflansche (9) des elastischen Mittelstückes (8) jeweils zwischen einem im Querschnitt winkelförmigen, mit dem Ventilstutzen (32) verbindbaren Ring (34) einerseits und dem Mantelrohr (12) und/oder dem Stützrohr (10) andererseits dicht eingepreßt sind.

9. Regelventil nach einem der vorhergehenden Ansprüche, **dadurch gekennzeichnet**, daß das gelochte Stützrohr (10) im Mantelrohr (12) integriert ausgebildet ist, derart, daß das Mantelrohr (12) Innenrippen (36) aufweist, die von Querkanälen (37) durchsetzt sind, welche die zwischen den Innenrippen (36) gebildeten Kammern (39) miteinander verbinden.

10. Regelventil nach einem der Ansprüche 1 bis 8, **dadurch gekennzeichnet**, daß anstelle des gelochten Stützrohres (10) ein poröses Rohr (41) aus Sintermaterial vorgesehen ist.

11. Regelventil nach Anspruch 10, **dadurch gekennzeichnet**, daß das poröse Rohr (41) in das Mantelrohr (12) innenseitig eingelassen ist.

12. Regelventil nach Anspruch 1, **dadurch gekennzeichnet,** daß das Heizelement (22) auf der Außenseite oder Innenseite des Mantelrohres (12) angebracht oder in das Mantelrohr integriert ist.

13. Regelventil nach einem der vorhergehenden Ansprüche, **dadurch gekennzeichnet,** daß das Mantelrohr (12) wenigstens teilweise exzentrisch zur Ventilachse (Strömungsmitte) ausgebildet ist, derart, daß eine Art Flüssigkeitssack (43) für das Füllungsmedium (18) gebildet ist, an der das Heizelement (22) angebracht ist.

14. Regelventil nach einem der vorhergehenden Ansprüche, **dadurch gekennzeichnet**, daß für eine aufrechte Anwendung des Regelventils ein ringförmiges Heizelement (45) am unteren Teil des Mantelrohres (12) angeordnet ist.

15. Regelventil nach einem der vorhergehenden Ansprüche, **dadurch gekennzeichnet**, daß die Wandstärke des rohrförmigen, elastischen Mittelstückes (8) in Umfangsrichtung und/oder Längsrichtung unterschiedlich ausgebildet ist.

16. Regelventil nach einem der vorhergehenden Ansprüche, **dadurch gekennzeichnet**, daß das elastische Mittelstück (8) aus einem elastoplastischen, einem laminierten oder armierten Material besteht.

17. Regelventil nach einem der vorhergehenden Ansprüche, **dadurch gekennzeichnet**, daß der Einlaß (40) des Regelventils (1) einen kleineren Querschnitt aufweist als der Auslaß (42).

18. Regelventil nach einem der vorhergehenden Ansprüche, **dadurch gekennzeichnet**, daß das Regelventil (1) auslaßseitig einen Einsatz (44) mit einem kegelförmigen Stützring (44') als inneres Stützelement für das auslaßseitige Ende des elastischen Mittelstückes (8) aufweist.

19. Regelventil nach Anspruch 1, **dadurch gekennzeichnet**, daß der induktive Geber (25) aus einer zylindrischen, elastischen, magnetischen Schicht (26), die mit der Außenseite des elastischen Mittelstückes (8) verbunden oder in das Mittelstück (8) eingebettet ist, und aus einer Meßwicklung (28) besteht, die auf der Außenseite des Mantelrohres (12) angeordnet ist.

20. Regelventil nach Anspruch 19, **dadurch gekennzeichnet**, daß die Meßwicklung eine das Mantelrohr (12) umgebende Spule oder eine seitlich am Mantelrohr angeordnete Spule ist.

21. Regelventil nach Anspruch 1, **dadurch gekennzeichnet,** daß der kapazitive Geber aus einer elastischen Elektrode, die mit der Außenseite des elastischen Mittelstückes verbunden oder in das Mittelstück eingebettet ist, und aus auf der Außenseite des Mantelrohres (12) angeordneten Elektroden besteht.

22. Regelventil nach einem der Ansprüche 1, 13, 14 oder 21, **dadurch gekennzeichnet,** daß das Mantelrohr (12) an der Stelle, an der das Heizelement (22; 45) anliegt, gut wärmeleitend (Element (38)) ausgebildet ist.

23. Regelventil nach einem der vorhergehenden Ansprüche, **dadurch gekennzeichnet,** daß zur Vermeidung oder Verringerung eines Wärmeüberganges von den warmen Teilen des Ventils in den Eintrittsbereich des Ventils anstelle des Füllungsmediums (18) (Flüssigkeit / Dampf) eine Adsorptions-Füllung (100), bestehend aus einem Art Sorptionsstoff als Füllungsmaterial und einem im Füllungsmterial adsorbierten Gas unter einem bestimmten Druck vorgesehen ist.

24. Regelventil nach Anspruch 5 oder 23, **dadurch gekennzeichnet,** daß zwischen gelochtem Stützrohr (10) und der Adsorptionsfüllung (100) eine Schicht (101) aus Sintermaterial angeordnet ist, die für das Gas durchlässig und für den Adsorptionsstoff undurchlässig ist.

25. Regelventil nach Anspruch 23 oder 24, **dadurch gekennzeichnet**, daß die einen Druckgenerator (120) bildende Einrichtung aus Heizeinrichtung (22) und Adsorptionsfüllung (100) in Strömungsrichtung gesehen hinter dem die Drosselstelle bildenden elastischen Mittelstück (8) angeordnet ist.

26. Regelventil nach Anspruch 25, **dadurch gekennzeichnet**, daß das Mantelrohr (12) im Bereich des elastischen Mittelstückes (8) aus einem schlecht wärmeleitenden Material (102) besteht.

27. Regelventil nach Anspruch 25, **dadurch gekennzeichnet**, daß der Druckgenerator (120) von einem Wärmerückführungselement (98) überbrückt ist, das den Bereich des austrittsseitigen Endes des Mittelstückes (8) mit dem Ventilausgang verbindet.

28. Regelventil nach einem der Ansprüche 23 bis 27, **dadurch gekennzeichnet**, daß der Druckgenerator (120) beabstandet zum Ventil angeordnet und mit Hilfe einer wärmeleitenden Lasche (103) mit dem Ventilaustritt verbunden ist oder entfernt vom Ventil angeordnet ist, und daß die Adsorptionsfüllung (100) über eine Rohrleitung (104) mit dem Mantelraum (16) des Ventils verbunden ist.

29. Regelventil nach einem der vorhergehenden Ansprüche, **dadurch gekennzeichnet**, daß für die Druckübertragung auf das elastische Mittelstück (8) des Ventils eine hydraulische Flüssigkeit (107) vorgesehen ist, die sich in einer oberen Kammer (97) eines unterhalb des Ventils angeordneten Behälters (105) befindet, daß die Kammer (97) mittels einer elastischen Membran (106) von einer unteren Kammer (96) des Behälters (105) getrennt ist, in der sich die Füllungsflüssigkeit (18) mit darüber angeordnetem Dampfraum (95) befindet, und daß die obere Kammer (97) über die Rohrleitung (94) mit dem Mantelraum (16) des Ventils in Verbindung steht.

30. Regelventil nach Anspruch 29, **dadurch gekennzeichnet**, daß sich die hydraulische Flüssigkeit in einem einseitig verschlossenen, elastischen Schlauch (108) befindet, dessen offenes Ende im zylindrisch ausgebildeten Behälter (105) abgedichtet angeordnet ist und über die Rohrleitung (94) mit dem Mantelraum (16) des Ventils in Verbindung steht.

31. Regelventil nach Anspruch 30, **dadurch gekennzeichnet**, daß der Schlauch (108) von der Adsorptions-Füllung (100) umgeben ist.

32. Regelventil nach einem der Ansprüche 28 bis 31, **dadurch gekennzeichnet**, daß zwischen Mantelrohr (12) und separatem, benachbartem Druckgenerator (120) Luftschlitze (99) im Isoliermaterial (24) vorgesehen sind.

33. Regelventil nach einem der vorhergehenden Ansprüche, **dadurch gekennzeichnet**, daß das elastische Mittelstück (8) eine über den Ringflansch (9) hinausgehende Verlängerung (110) aufweist, die einstückig mit dem Mittelstück oder als separates Teil ausgebildet ist, welches einen Ringflansch (9') zur dichten Anlage am Ringflansch (9) des Mittelstückes aufweist.

34. Regelventil nach Anspruch 33, **dadurch gekennzeichnet**, daß die Verlängerung (110) in einem speziell geformten, mit dem Mantelrohr (12) verbundenen Stutzen (109) angeordnet ist.

35. Regelventil nach Anspruch 34, **dadurch gekennzeichnet**, daß der Stutzen (109) wenigstens teilweise aus einem Material mit geringer Wärmeleitfähigkeit besteht.

36. Regelventil nach einem der Ansprüche 33 bis 35, **dadurch gekennzeichnet**, daß das Mantelrohr (12) auf der Innenseite mit Rippen (112) ausgestattet ist.

## Claims

1. An electronically controlled regulating valve having a main tube (2), which comprises two end pieces (4, 6) which can be constructed as an outlet and inlet and a tubular, elastic centre piece (8) disposed therebetween, which is surrounded by a sealed space in the casing (16) and to change its shape and therefore the cross section of flow of this space (16) is impinged with pressure, which space is filled with a filling medium, the pressure of which is dependent on the temperature of the filling medium, but is independent of the change in volume of the space in the casing and is actively connected to a controlled heating element (22),
**characterised in that** an inductive or capacitive transmitter (25) is provided to measure the change in shape of the tubular, elastic centre piece (8),
and in that the device forming a pressure generator, which consists of the heating element (22) and the filling medium (18, 100), is disposed separately from the elastic centre piece (8) as far as heat is concerned and is in active contact with a heat evacuation device 98, 102).

2. Control valve defined in claim 1, characterized in that the filling medium (18) consists at least of a saturated medium each time with a liquid and a vapor phase and/or of an adsorption filling (100) with at least one pair of substances consisting of at least one sorbent and at least one gas of which at least one gas can be adsorbed by the sorbent.

3. Control valve defined in either of claims 1 and 2, characterized in that it is surrounded at least in the zone of the encasing tube (12) by an insulation (24).

4. Control valve defined in claim 2, characterized in that the filling medium (18) is isobutane.

5. Control valve defined in claim 2, characterized in that the filling material is activated carbon and/or zeolite and in that the gas is carbon dioxide.

6. Control valve defined in claim 1, characterized in that the two ends of the elastic center piece (8) each are impermeably embedded in a metal ring (30) and together with a perforated support tube (10) surrounding the center piece (8) and the encasing tube (12) are connected to the valve stubs (32).

7. Control valve defined in either of claims 1 and 6, characterized in that the tubular elastic center piece (8) comprises at both ends an annular flange (9) pointing outside, each being impermeably force-fitted between the encasing tube (12) and/or the support tube (10) on one hand and the valve stubs (32) on the other.

8. Control valve defined in claim 7, characterized in that the annular flange (9) of the elastic center piece (8) is impermeably force-fitted each time between a cross-sectionally angular ring (34) connectable to the valve stub (32) on one hand and the encasing tube (12) and/or support tube (10) on the other.

9. Control valve defined in one of the above claims, characterized in that the perforated support tube (10) is integrated into the encasing tube (12) in such a way that the encasing tube (12) comprises inner ribs (36) through which pass cross-ducts (37) that connect together the chambers (39) formed between the inner ribs (36).

10. Control valve defined in one of claims 1 through 8, characterized in that a porous pipe (41) made of a sintered material is provided in lieu of the perforated support tube (10).

11. Control valve defined in claim 10, characterized in that the porous pipe (41) is inserted on the inside of the encasing tube (12).

12. Control valve defined in claim 1, characterized in that the heater element (22) is mounted on the outside or on the inside of the encasing tube (12) or is integrated into the encasing tube.

13. Control valve defined in one of the above claims, characterized in that the encasing tube (12) is at least partly excentric relative to the valve axis (center of flow) in such a way that a sort of liquid pouch (43) is formed for the filling medium (18), a heater element (22) being mounted to said pouch.

14. Control valve defined in one of the above claims, characterized in that when the this control valve is used vertically, an annular heater element (45) is mounted at the lower part of the enclosing tube (12).

15. Control valve defined in one of the above claims, characterized in that the wall thickness of the tubular, elastic center piece (8) varies circumferentially and/or longitudinally.

16. Control valve defined in one of the above claims, characterized in that the elastic center piece (8) consists of a plasto-elastic, laminated or reinforced material.

17. Control valve defined in one of the above claims, characterized in that the intake (40) of the control valve (1) evinces a lesser cross-section than the outlet (42).

18. Control valve defined in one of the above claims, characterized in that at the outlet side the control valve (1) comprises an insert (44) with a conical support ring (44') as the inside bracing element for the outlet-side end of the elastic center piece (8).

19. Control valve defined in claim 1, characterized in that the inductive pickup (25) consists of a cylindrical, elastic, magnetic layer (26) connected to the outside of the center piece or imbedded ino the center piece and of a measurement winding (28) mounted on the outside of the encasing tube (12).

20. Control valve defined in claim 19, characterized in that the measurement winding is a coil surrounding the encasing tube (12) or a coil mounted laterally at the enclosing tube.

21. Control valve defined in claim 1, characterized in that the capacitive pickup consists of an elastic electrode connected to the outside of the center piece or imbedded into the center piece and of electrodes mounted on the outside of the enlosing tube (12).

22. Control valve defined in one of claims 1, 13, 14 or 21, characterized in that the encasing tube (12) is made to be thermally well conducting ([ element (38)] where the heater element (22, 45) touches.

23. Control valve defined in one of the above claims, characterized in that to avert or reduce heat transfer from the warm valve parts to the valve intake zone, the filling medium (18) [liquid/vapor] is replaced with an adsorption filling (100) consisting of a kind of sorbent as the filling material and a gas adsorbed in the filling at a specific pressure.

24. Control valve defined in either of claims 5 and 23, characterized in that a layer (101) of a sintered material is present between the perforated support tube (10) and the adsorption filling (100), said layer being gas-permeable but adsorbent-impermeable.

25. Control valve defined in either of claims 23 and 24, characterized in that the system forming a pressure generator (120) and consisting of the heater (22) and the adsorption filling (100) is mounted, as seen in the direction of flow, behind the elastic center piece forming the throttle site.

26. Control valve defined in claim 25, characterized in that the enclosing tube (12) consists of a thermally poorly conducting material (102) in the zone of the elastic center piece (8).

27. Control valve defined in claim 25, characterized in that the pressure generator (120) is spanned by a heat feedback element (98) connecting the zone of the outlet-side end of the center piece (8) to the valve outlet.

28. Control valve defined in one of claims 23 through 27, characterized in that the pressure generator (120) is mounted a distance away from the valve and is connected by a thermally conducting bracket (103) to the valve outlet or is mounted a distance from the valve, and in that the adsorption filling (100) is connected by a tubular conduit (104) to the enclosing space (16) of the valve.

29. Control valve defined in one of the above claims, characterized in that a hydraulic liquid (107) is provided to transmit the pressure to the elastic center piece (8) of the valve and is located in an upper chamber (97) of a receptacle (105) mounted underneath the valve, in that the chamber (97) is partitioned by an elastic membrane (106) from a lower chamber (96) of a receptacle (105) holding the filling liquid (18) with a vapor space (95) arranged above, and in that the upper chamber (97) communicates through a tubular conduit (94) with the valve enclosing-space (16).

30. Control valve defined in claim 29, characterized in that the hydraulic liquid is located in an elastic hose (108) sealed at one end and of which the open end is mounted in impermeable manner in the cylindrical receptacle (105) and communicates through the tubular conduit (94) with the valve enclosing-space (16).

31. Control valve defined in claim 30, characterized in that the hose (108) is surrounded by an adsorption filling (100) defined in one of claims 26 through 28.

32. Control valve defined in one of claims 28 through 31, characterized in that air slits (99) are provided in the insulating material (24) between the encasing tube (12) and the separate pressure generator (120).

33. Control valve defined in one of the above claims, characterized in that the elastic center piece (8) is provided with an extension (110) beyond the annular flange (9) which is integral with the center piece or a separate part with an annular flange (9') to tightly rest against the annular flange (9) of the center piece.

34. Control valve defined in claim 33, characterized in that the extension (110) is mounted in an especially shaped stub (109) connected to the enclosing tube (12).

35. Control valve defined in claim 34, characterized in that the stub (109) consists at least in part of a material of low thermal conductivity.

36. Control valve defined in one of claims 33 through 35, characterized in that the enclosing tube (12) is provided with ribs (112) on the inside.

## Revendications

1. Soupape de réglage à commande électronique avec un tube principal (2), deux pièces d'extrémité (4, 6) pouvant être réalisées sous forme d'entrée et de sortie et une pièce centrale tubulaire élastique (8) disposée entre elles, qui est entourée par un espace d'enveloppe (16) fermé en soi et est soumis à l'action d'une pression pour modifier sa forme et, de ce fait, la section transversale d'écoulement de cet espace d'enveloppe (16) qui est rempli d'un milieu de remplissage dont la température est dépendante de la température du milieu de remplissage mais indépendante de la modification de volume de l'espace d'enveloppe et est en liaison active avec un élément chauffant (22) pouvant être commandé,
caractérisée en ce que, pour mesurer la déformation de la pièce intermédiaire tubulaire élastique (8), un transmetteur inductif ou capacitif (25) est prévu et que le dispositif constitué par l'élément chauffant (22) et le milieu de remplissage (18, 100), formant un générateur de pression est disposé séparé thermiquement de la pièce centrale élastique (8) et est en contact actif avec une installation d'évacuation de chaleur (98, 102).

2. Soupape de réglage selon la revendication 1,
caractérisée en ce que le milieu de remplissage (18) est constitué d'au moins un milieu à l'état saturé avec respectivement une phase liquide et une phase vapeur et/ou d'un remplissage absorbant (100) avec au moins un couple de matériaux constitué d'au moins un matériau sorbant et d'au moins un gaz parmi lesquels au moins l'un est absorbable par le matériau sorbant.

3. Soupape de réglage selon la revendication 1 ou 2,
caractérisée en ce qu'elle est entourée par une isolation (24) au moins dans la région d'un tube d'enveloppe (12) entourant l'espace d'enveloppe (16).

4. Soupape de réglage selon la revendication 2,
caractérisée en ce que le milieu de remplissage (18) est de l'isobutane.

5. Soupape de réglage selon la revendication 2,
caractérisée en ce que le milieu de remplissage est du charbon actif et/ou de la zéolithe et le gaz est du dioxyde de carbone.

6. Soupape de réglage selon la revendication 1,
caractérisée en ce que les deux extrémités de la pièce centrale (8) sont encastrées de manière étanche respectivement dans une bague métallique (30) qui est reliée, en même temps qu'un tube d'appui (10) perforé entourant la pièce centrale (8) et que le tube d'enveloppe (12) à l'ajutage (32) de la soupape.

7. Soupape de réglage selon la revendication 1 ou 6,
caractérisée en ce que la pièce centrale tubulaire élastique (8) présente aux deux extrémités des flasques annulaires (9) dirigés vers l'extérieur qui sont comprimés de manière étanche entre le tube d'enveloppe (12) et/ou le tube d'appui (10) d'une part et l'ajutage (32) de la soupape d'autre part.

8. Soupape de réglage selon la revendication 7,
caractérisée en ce que les flasques annulaires (9) de la pièce centrale élastique (8) sont comprimés de manière étanche entre une bague (34) angulaire en section transversale, pouvant être reliée à l'ajutage (32) de la soupape, d'une part et au tube d'enveloppe (12) et/ou au tube d'appui (10) d'autre part.

9. Soupape de réglage selon l'une des revendications précédentes,
caractérisée en ce que le tube d'appui perforé (10) est réalisé intégré dans le tube d'enveloppe (12) de telle manière que le tube d'enveloppe (12) présente des nervures internes (36) qui sont traversées par des canaux transversaux (37) qui relient les unes aux autres les chambres (39) formées entre les nervures internes (36).

10. Soupape de réglage selon l'une des revendications 1 à 8,
caractérisée en ce qu'un tube poreux (41) en matériau fritté est prévu à la place du tube d'appui perforé (10).

11. Soupape de réglage selon la revendication 10,
caractérisée en ce que le tube poreux (41) est encastré du côté interne dans le tube d'enveloppe (12).

12. Soupape de réglage selon la revendication 1,
caractérisée en ce que l'élément chauffant (22) est monté sur la face externe ou la face interne du tube d'enveloppe (12) ou est intégré dans le tube d'enveloppe.

13. Soupape de réglage selon l'une des revendications précédentes,
caractérisée en ce que le tube d'enveloppe (12) est réalisé au moins partiellement excentrique par rapport à l'axe de soupape (centre d'écoulement) de telle sorte qu'une sorte de sac à liquide (43) pour le milieu de remplissage (18) est formé, auquel est monté l'élément chauffant (22).

14. Soupape de réglage selon l'une des revendications précédentes,
caractérisée en ce qu'un élément chauffant annulaire (45) est disposé à la partie inférieure du tube d'enveloppe (12).

15. Soupape de réglage selon l'une des revendications précédentes,
caractérisée en ce que l'épaisseur de paroi de la pièce centrale tubulaire élastique (8) est réalisée différente en direction périphérique et/ou en direction longitudinale.

16. Soupape de réglage selon l'une des revendications précédentes,
caractérisée en ce que la pièce centrale élastique (8) est constituée d'un matériau élastoplastique, d'un matériau laminé ou d'un matériau orné.

17. Soupape de réglage selon l'une des revendications précédentes,
caractérisée en ce que l'entrée (40) de la soupape de réglage (1) présente une section transversale plus faible que la sortie (42).

18. Soupape de réglage selon l'une des revendications précédentes,
caractérisée en ce que la soupape de réglage (1) présente du côté sortie un insert (44) avec une bague d'appui conique (44') en tant qu'élément d'appui pour l'extrémité du côté sortie de la pièce centrale élastique (8).

19. Soupape de réglage selon la revendication 1,
caractérisé en ce que le transmetteur inductif (25) est constitué d'une couche cylindrique élastique magnétique (26) qui est relié à la face externe de la pièce centrale élastique (8) ou est noyée dans la pièce centrale (8) et d'une bobine de mesure (28) qui est disposée sur la face externe du tube d'enveloppe (12).

20. Soupape de réglage selon la revendication 19,
caractérisée en ce que la bobine de mesure est une bobine entourant le tube d'enveloppe (12) ou une bobine disposée latéralement au tube d'enveloppe.

21. Soupape de réglage selon la revendication 1,
caractérisée en ce que le transmetteur capacitif est constitué d'une électrode élastique qui est reliée à la face externe de la pièce centrale élastique ou est noyée dans la pièce centrale et d'électrodes disposées sur la face externe du tube d'enveloppe (12).

22. Soupape de réglage selon l'une des revendications 1, 13, 14 ou 21,
caractérisée en ce que le tube d'enveloppe (12) est réalisé bon conducteur de la chaleur [élément (38)] à l'emplacement auquel est adjacent l'élément chauffant (22; 45).

23. Soupape de réglage selon l'une des revendications précédentes,
caractérisée en ce que, pour éviter ou réduire une transmission de chaleur des parties chaudes de la soupape à la région d'entrée de la soupape, un remplissage absorbant (100), constitué d'un type de matériau sorbant en tant que matériau de remplissage et d'un gaz adsorbé dans le matériau de remplissage est prévu, sous une pression déterminé, à la place du milieu de remplissage (18) (liquide/vapeur).

24. Soupape de réglage selon la revendication 5 ou 23,
caractérisée en ce qu'une couche (101) en matériau fritté, qui est perméable au gaz et imperméable au matériau adsorbant est disposée entre le tube d'appui perforé (10) et le remplissage adsorbant (100).

25. Soupape de réglage selon la revendication 23 ou 24,
caractérisée en ce que l'installation constituée du dispositif de chauffage (22) et du remplissage adsorbant (100), formant un générateur de pression (120), est disposée, vu dans la direction d'écoulement, derrière la pièce centrale élastique (8) formant l'emplacement d'étranglement.

26. Soupape de réglage selon la revendication 25,
caractérisée en ce que le tube d'enveloppe (12) est constitué d'un matériau mauvais conducteur de la chaleur (102) dans la région de la pièce centrale élastique (8).

27. Soupape de réglage selon la revendication 25,
caractérisée en ce que le générateur de pression (120) est ponté par un élément d'évacuation de chaleur (98) qui relie la région de l'extrémité du côté sortie de la pièce centrale (8) à la sortie de la soupape.

28. Soupape de réglage selon l'une des revendications 23 à 27,
caractérisée en ce que le générateur de pression (120) est disposé écarté de la soupape et relié à la sortie de la soupape par un collier (103) conducteur de la chaleur, ou bien est disposé éloigné de la soupape, et que le remplissage adsorbant (100) est relié par une conduite tubulaire (104) à l'espace d'enveloppe (16) de la soupape.

29. Soupape de réglage selon l'une des revendications précédentes,
caractérisée en ce que, pour la transmission de la pression à la pièce centrale élastique (8) de la soupape, un liquide hydraulique (107) est prévu, qui se trouve dans une chambre supérieure (97) d'un récipient (105) disposé au-dessus de la soupape, que la chambre (97) est séparée au moyen d'une membrane élastique (106) d'une chambre inférieure (96) du récipient (105), dans laquelle se trouve le liquide de remplissage (18) avec un espace à vapeur (95) disposé dessus, et que la chambre supérieure (97) est en liaison, par la conduite tubulaire (94), avec l'espace d'enveloppe (16) de la soupape.

30. Soupape de réglage selon la revendication 29,
caractérisée en ce que le liquide hydraulique se trouve dans un tuyau élastique (108) fermé d'un côté dont l'extrémité ouverte est disposée de manière étanche dans le récipient (105) réalisé cylindrique et est en liaison, par la conduite tubulaire (94), avec l espace d'enveloppe (16) de la soupape.

31. Soupape de réglage selon la revendication 30,
caractérisée en ce que le tuyau (108) est entouré par le remplissage adsorbant (100).

32. Soupape de réglage selon l'une des revendications 28 à 31,
caractérisée en ce que des fentes d'air (99) sont prévues dans le matériau isolant (24) entre le tube d'enveloppe (12) et le générateur de pression (120) voisin séparé.

33. Soupape de réglage selon l'une des revendications précédentes,
caractérisée en ce que la pièce centrale élastique (8) présente un prolongement (110) sortant sur le flasque annulaire (9), qui est réalisé d'une seule pièce avec la pièce centrale ou sous forme de pièce séparée qui présente un flasque annulaire (9') pour l'appui étanche sur le flasque annulaire (9) de la pièce centrale.

34. Soupape de réglage selon la revendication 33,
caractérisée en ce que le prolongement (110) est disposé dans une tubulure (109) de forme spéciale reliée au tube d'enveloppe (12).

35. Soupape de réglage selon la revendication 34,
caractérisée en ce que la tubulure (109) est constituée au moins partiellement d'un matériau à conductibilité thermique réduite.

36. Soupape de réglage selon l'une des revendications 33 à 35,
caractérisée en ce que le tube d'enveloppe (12) est muni de nervures (112) sur la face interne.
